# EUROPEAN PATENT SPECIFICATION

(11) **EP 4 231 664 B1**
(45) Date of publication and mention of the grant of the patent: **10.12.2025**
(21) Application number: 22215628.3
(22) Date of filing: 21.12.2022
(51) Int. Cl.: H04R 7/04

(54) **APPARATUS COMPRISING TWO VIBRATION APPARATUS**
VORRICHTUNG UMFASSEND ZWEI SCHWINGUNGSERZEUGER
APPAREIL COMPRENANT DEUX APPAREILS VIBRATOIRES

(30) Priority: 28.12.2021 JP 2021214047
(43) Date of publication of application: 23.08.2023
(73) Proprietor: LG Display Co., Ltd., SEOUL, 07336 (KR)
(72) Inventor: Ye, Jaehun, Tokyo, 140-0002 (JP); Takasugi, Shinji, Tokyo, 140-0002 (JP)
(74) Representative: Ter Meer Steinmeister & Partner

(56) References cited:
- US-A1- 2012 057 728
- US-A1- 2021 392 439

## Description

The application claims priority to JP Patent Appl. No. 2021-214047 filed on December 28, 2021.

### BACKGROUND

### Field of the Invention

The disclosure relates to an apparatus, particularly, to an apparatus for outputting a sound.

### Discussion of the Related Art

An apparatus includes a separate speaker or a sound apparatus for providing a sound. The sound apparatus includes a vibration system which converts an input electrical signal into a physical vibration. Piezoelectric speakers including ferroelectric ceramic or the like are lightweight and have low power consumption, and thus, is used for various purposes.

Piezoelectric devices used for piezoelectric speakers are limited in vibration width (or displacement width), and due to this, there is a problem where it is difficult to enhance a sound characteristic and a sound pressure level characteristic of various-pitched sound bands (For example, a middle-low-pitched sound band or a middle-high-pitched sound band).

US 2012/057728 A1 presents a piezoelectric speaker that includes: a chassis having a wall surface including an opening; a plurality of diaphragms including at least a first piezoelectric diaphragm and second piezoelectric diaphragms which vibrate in phases opposite to each other when a voltage is applied; and a joint member which connects the first and second piezoelectric diaphragms in a positional relationship such that the diaphragms are located at positions different from each other in a thickness direction, and one of the diaphragms is provided, in the opening of the chassis, to have one surface facing an outside of the chassis and an other surface facing an inside of the chassis, and functions as a radiation plate which radiates a sound wave by vibrating at an amplitude generated by synthesizing amplitudes of the first and second piezoelectric diaphragms.

### SUMMARY

Accordingly, the disclosure is directed to providing an apparatus that substantially obviates one or more problems due to limitations and disadvantages of the related art.

The inventor of the disclosure has recognized the technical problem described above and have performed various experiments for implementing a vibration apparatus which may enhance a sound pressure level of one or more various sound band. Through the various experiments, the inventors have invented an apparatus including a new vibration apparatus, which may enhance a sound pressure level of the low-pitched sound band.

It is an object of the disclosure to provide an apparatus which may enhance a sound characteristic and/or a sound pressure level characteristic of various-pitched sound bands generated based on a vibration of a passive vibration member.

Another object of the disclosure is to provide an apparatus which may enhance a sound characteristic and/or a sound pressure level characteristic of a middle-low-pitched sound band or a middle-high-pitched sound band generated based on a vibration of a passive vibration member.

Additional features and aspects will be set forth in part in the description that follows, and in part will be apparent from the description, or may be learned by practice of the inventive concepts provided herein. Other features and aspects of the inventive concepts may be realized and attained by the structure particularly pointed out in the written description, or derivable therefrom, and the claims hereof as well as the appended drawings.

The object is solved by the features of the independent claim. The invention is set out by the features of the independent claim. Preferred embodiments are given in the dependent claims.

To achieve these and other aspects of the inventive concepts, as embodied and broadly described herein, an apparatus comprises a vibration apparatus connected to a rear surface of a passive vibration member, and a supporting member at the rear surface of the passive vibration member, the vibration apparatus comprises a first vibration portion, a second vibration portion connected to the first vibration portion, and a connection portion connected to the second vibration portion and the rear surface of the passive vibration member.

In another aspect, an apparatus comprises a plurality of vibration apparatuses connected to a rear surface of a passive vibration member, and a supporting member at the rear surface of the passive vibration member, each of the plurality of vibration apparatuses comprises a first active vibration member, a 2-1^{st} active vibration member and a 2-2^{nd} active vibration member connected to a periphery of the first active vibration member in parallel with a center portion of the first active vibration member therebetween, and a connection portion connected to the rear surface of the passive vibration member and each of the 2-1^{st} active vibration member and the 2-2^{nd} active vibration member.

According to an embodiment of the disclosure, an apparatus for enhancing a sound pressure level of the low-pitched sound band generated based on a vibration of a passive vibration member may be provided.

In one or more embodiments, the apparatus comprises a passive vibration member, a vibration apparatus connected to a rear surface of the passive vibration member, and a supporting member at the rear surface of the passive vibration member.

In one or more embodiments, the connection portion is connected to a periphery or outer edge of the second vibration portion and the rear surface of the passive vibration member.

In one or more embodiments, the vibration apparatus comprises a first vibration portion, a second vibration portion connected to a periphery of the first vibration portion, and a connection portion connected to a periphery of the second vibration portion and the rear surface of the passive vibration member.

In one or more embodiments, the first vibration portion comprises a first active vibration member including first and second periphery portions which are parallel with each other, the second vibration portion may comprise a 2-1^{st} active vibration member and a 2-2^{nd} active vibration member respectively connected to the first and second periphery portions of the first active vibration member.

In one or more embodiments, the 2-1^{st} active vibration member and the 2-2^{nd} active vibration member is disposed in parallel with the first active vibration member therebetween. Preferably, the first active vibration member may be disposed at a center between the two 2-1^{st} active vibration member and the 2-2^{nd} active vibration member.

In one or more embodiments, each of the 2-1^{st} active vibration member and the 2-2^{nd} active vibration member comprises a first periphery portion overlapping the first active vibration member, and a second periphery portion connected to the connection portion.

In one or more embodiments, the connection portion comprises a first connection member connected between the second periphery portion of the 2-1^{st} active vibration member and the passive vibration member, and a second connection member connected between the second periphery portion of the 2-2^{nd} active vibration member and the passive vibration member.

In one or more embodiments, a corner portion of the first active vibration member may overlap the first periphery portion of each of the 2-1^{st} active vibration member and the 2-2^{nd} active vibration member.

In one or more embodiments, each of the 2-1^{st} active vibration member and the 2-2^{nd} active vibration member may be disposed to be inclined with respect to each of the first and second periphery portions of the first active vibration member. The inclination refers to a rotation by a predetermined angle smaller than 90° in their planes with respect to the first vibration member. So, the three vibration plates may have edges being non parallel to each other. Thereby, the length dimension of the vibration apparatus might be extended.

In one or more embodiments, each of the 2-1^{st} active vibration member and the 2-2^{nd} active vibration member may comprise a first corner portion overlapping the first active vibration member, and a second corner portion connected to the connection portion.

In one or more embodiments, the connection portion may comprise a first connection member connected between the second corner portion of the 2-1^{st} active vibration member and the passive vibration member, and a second connection member connected between the second corner portion of the 2-2^{nd} active vibration member and the passive vibration member.

In one or more embodiments, the first vibration portion may comprise a first active vibration member including first to fourth periphery portions, and the second vibration portion may comprise a 2-1^{st} active vibration member connected to the first periphery portion of the first active vibration member, a 2-2^{nd} active vibration member connected to the second periphery portion of the first active vibration member in parallel with the 2-1^{st} active vibration member with a center portion of the first active vibration member therebetween, a 2-3^{rd} active vibration member connected to the third periphery portion of the first active vibration member, and a 2-4^{th} active vibration member connected to the fourth periphery portion of the first active vibration member in parallel with the 2-3^{rd} active vibration member with the center portion of the first active vibration member therebetween.

In one or more embodiments, a width of each of the 2-1^{st} to 2-4^{th} active vibration members may be smaller than a width of the first active vibration member.

In one or more embodiments, each of the 2-1^{st} to 2-4^{th} active vibration members may comprise a first periphery portion overlapping the first active vibration member, and a second periphery portion connected to the connection portion.

In one or more embodiments, the connection portion may comprise a first connection member connected between the second periphery portion of the 2-1^{st} active vibration member and the passive vibration member, a second connection member connected between the second periphery portion of the 2-2^{nd} active vibration member and the passive vibration member, a third connection member connected between the second periphery portion of the 2-3^{rd} active vibration member and the passive vibration member, and a fourth connection member connected between the second periphery portion of the 2-4^{th} active vibration member and the passive vibration member.

In one or more embodiments, a corner portion of the first active vibration member may overlap the first periphery portion of each of the 2-1^{st} to 2-4^{th} active vibration members.

In one or more embodiments, each of the 2-1^{st} active vibration member and the 2-2^{nd} active vibration member may be disposed to be inclined with respect to each of the first and second periphery portions of the first active vibration member, and each of the 2-3^{rd} active vibration member and the 2-4^{th} active vibration member may be disposed to be inclined with respect to each of the third and fourth periphery portions of the first active vibration member.

In one or more embodiments, each of the 2-1^{st} to 2-4^{th} active vibration members may comprise a first corner portion overlapping the first active vibration member, and a second corner portion connected to the connection portion, the connection portion may comprise a first connection member connected between the second corner portion of the 2-1^{st} active vibration member and the passive vibration member, a second connection member connected between the second corner portion of the 2-2^{nd} active vibration member and the passive vibration member, a third connection member connected between the second corner portion of the 2-3^{rd} active vibration member and the passive vibration member, and a fourth connection member connected between the second corner portion of the 2-4^{th} active vibration member and the passive vibration member.

An apparatus of an embodiment of the disclosure may comprise a passive vibration member, a plurality of vibration apparatuses connected to a rear surface of the passive vibration member, and a supporting member at the rear surface of the passive vibration member, each of the plurality of vibration apparatuses may comprise a first active vibration member, a 2-1^{st} active vibration member and a 2-2^{nd} active vibration member connected to a periphery of the first active vibration member in parallel with a center portion of the first active vibration member therebetween, and a connection portion connected to the rear surface of the passive vibration member and each of the 2-1^{st} active vibration member and the 2-2^{nd} active vibration member.

In one or more embodiments, the first active vibration member may comprise first and second periphery portions parallel with each other, and the first periphery portions of the 2-1^{st} active vibration member and the 2-2^{nd} active vibration member may be respectively connected to the first and second periphery portions of the first active vibration member.

In one or more embodiments, a corner portion of the first active vibration member may overlap the first periphery portion of each of the 2-1^{st} active vibration member and the 2-2^{nd} active vibration member.

In one or more embodiments, each of the 2-1^{st} active vibration member and the 2-2^{nd} active vibration member may be disposed to be inclined with respect to each of the first and second periphery portions of the first active vibration member.

In one or more embodiments, each of the plurality of vibration apparatuses may further comprise a 2-3^{rd} active vibration member and a 2-4^{th} active vibration member connected to a periphery of the first active vibration member in parallel with a center portion of the first active vibration member therebetween, the connection portion may be connected to the rear surface of the passive vibration member and each of the 2-1^{st} to 2-4^{th} active vibration members.

In one or more embodiments, the first active vibration member may comprise first and second periphery portions parallel with each other and third and fourth periphery portions parallel with each other, first periphery portions of the 2-1^{st} active vibration member and the 2-2^{nd} active vibration member may be respectively connected to the first and second periphery portions of the first active vibration member, and first periphery portions of the 2-3^{rd} active vibration member and the 2-4^{th} active vibration member may be respectively connected to the third and fourth periphery portions of the first active vibration member.

In one or more embodiments, a corner portion of the first active vibration member may overlap first periphery portion of each of the 2-1^{st} active vibration member and the 2-2^{nd} active vibration member.

In one or more embodiments, the first active vibration member may comprise first and second periphery portions parallel with each other and third and fourth periphery portions parallel with each other, each of the 2-1^{st} active vibration member and the 2-2^{nd} active vibration member may be disposed to be inclined with respect to each of the first and second periphery portions of the first active vibration member, and each of the 2-3^{rd} active vibration member and the 2-4^{th} active vibration member may be disposed to be inclined with respect to each of the third and fourth periphery portions of the first active vibration member.

In one or more embodiments, the plurality of vibration apparatuses may comprise a first group including one or more vibration apparatuses and a second group including one or more vibration apparatuses, and the number of vibration apparatuses of the first group may be equal to or different from the number of vibration apparatuses of the second group.

In one or more embodiments, a driving signal applied to the one or more vibration apparatuses of the first group may be the same as or different from a driving signal applied to the one or more vibration apparatuses of the second group.

In one or more embodiments, the active vibration member may comprise a vibration device including a piezoelectric material.

In one or more embodiments, each of the first active vibration member, the 2-1^{st} active vibration member, and the 2-2^{nd} active vibration member may comprise a vibration device including a piezoelectric layer, the piezoelectric layer may comprise a plurality of piezoelectric portions including a piezoelectric material, and a flexible portion between the plurality of piezoelectric portions.

In one or more embodiments, at least one or more of a plurality of piezoelectric portions configured at each of the 2-1^{st} active vibration member and the 2-2^{nd} active vibration member may overlap at least one or more of a plurality of piezoelectric portions configured at the first active vibration member.

In one or more embodiments, a driving signal applied to each of the 2-1^{st} active vibration member and the 2-2^{nd} active vibration member may have a phase which is the same as or opposite to a phase of a driving signal applied to the first active vibration member.

In one or more embodiments, a driving signal applied to the 2-1^{st} active vibration member may be the same as or different from a driving signal applied to the 2-2^{nd} active vibration member.

In one or more embodiments, a driving signal applied to each of the 2-1^{st} active vibration member and the 2-2^{nd} active vibration member may have a phase which is the same as or opposite to a phase of a driving signal applied to the first active vibration member.

In one or more embodiments, a driving signal applied to each of the 2-1^{st} to 2-4^{th} active vibration members may have a phase which is the same as or opposite to a phase of a driving signal applied to the first active vibration member.

In one or more embodiments, at least one or more of driving signals respectively applied to the 2-1^{st} to 2-4^{th} active vibration members may have at least one or more of different phases and different amplitudes.

In one or more embodiments, at least one or more of a phase and an amplitude of a driving signal applied to each of the 2-1^{st} to 2-4^{th} active vibration members may differ from at least one or more of a phase and an amplitude of a driving signal applied to the first active vibration member.

In one or more embodiments, the vibration apparatus may further comprise a mass member at the first active vibration member.

In one or more embodiments, the connection portion may comprise an elastic material.

In one or more embodiments, the passive vibration member may be a display panel including a display area having a plurality of pixels to implement an image, or may comprise one or more materials of wood, rubber, plastic, flexible glass, fiber, cloth, paper, metal, carbon, a mirror, and leather.

Other systems, methods, features and advantages will be, or will become, apparent to one with skill in the art upon examination of the following figures and detailed description. It is intended that all such additional systems, methods, features and advantages be included within this description, be within the scope of the disclosure, and be protected by the following claims. Nothing in this section should be taken as a limitation on those claims. Further aspects and advantages are discussed below in conjunction with aspects of the disclosure.

It is to be understood that both the foregoing general description and the following detailed description of the disclosure are exemplary and explanatory and are intended to provide further explanation of the disclosure as claimed

### BRIEF DESCRIPTION OF THE DRAWINGS

The companying drawings included to provide a further understanding of the disclosure and are incorporated in and constitute a part of this application, illustrate aspects and embodiments of the disclosure and together with the description serve to explain principles of the disclosure.
FIG. 1 illustrates an apparatus of an embodiment of the disclosure.
FIG. 2 is a cross-sectional view taken along line A-A' illustrated in FIG. 1.
FIG. 3 illustrates a vibration apparatus of a first embodiment of the disclosure illustrated in FIG. 2.
FIG. 4 illustrates a vibration device of an embodiment of the disclosure.
FIGs. 5A and 5B illustrate first and second modification embodiments of the piezoelectric layer illustrated in FIG. 4.
FIGs. 6A and 6B illustrate a displacement point and a vibration width (or a displacement width) of a vibration apparatus based on a driving signal applied to each of the first vibration portion and the second vibration portion illustrated in FIGs. 2 and 3.
FIG. 7 is another cross-sectional view taken along line A-A' illustrated in FIG. 1.
FIG. 8 illustrates a vibration apparatus of a second embodiment of the disclosure.
FIG. 9 illustrates a vibration apparatus of a third embodiment of the disclosure.
FIG. 10 illustrates a vibration apparatus of a fourth embodiment of the disclosure.
FIG. 11 illustrates a vibration apparatus of a fifth embodiment of the disclosure.
FIG. 12 block diagram illustrating a vibration driving circuit of a first embodiment of the disclosure.
FIG. 13 block diagram of a vibration driving circuit of a second embodiment of the disclosure.
FIG. 14 is another cross-sectional view taken along line A-A' illustrated in FIG. 1.
FIG. 15 graph for illustrating a sound output characteristic of an apparatus of a first embodiment of the disclosure.

Throughout the drawings and the detailed description, unless otherwise described, the same drawing reference numerals should be understood to refer to the same elements, features, and structures. The relative size and depiction of these elements may be exaggerated for clarity, illustration, and convenience.

### DETAILED DESCRIPTION OF THE DISCLOSURE

Reference will now be made in detail to embodiments of the disclosure, examples of which may be illustrated in the accompanying drawings. In the following description, when a detailed description of well-known functions or configurations related to this document is determined to unnecessarily cloud a gist of the inventive concept, the detailed description thereof will be omitted. The progression of processing steps and/or operations described is an example; however, the sequence of steps and/or operations is not limited to that set forth herein and may be changed as is known in the art, with the exception of steps and/or operations necessarily occurring in a particular order. Same reference numerals designate same elements throughout. Names of the respective elements used in the following explanations are selected only for convenience of writing the specification and may be thus different from those used in actual products.

Advantages and features of the disclosure, and implementation methods thereof will be clarified through following embodiments described with reference to the accompanying drawings. The disclosure may, however, be embodied in different forms and should not be construed as limited to the embodiments set forth herein. Rather, these embodiments are provided so that this disclosure will be thorough and complete, and will fully convey the scope of the disclosure to those skilled in the art. Furthermore, the disclosure is only defined by scopes of claims.

A shape, a size, a ratio, an angle, and a number disclosed in the drawings for describing embodiments of the disclosure are merely an example, and thus, the disclosure is not limited to the illustrated details. Like reference numerals refer to like elements throughout. In the following description, when the detailed description of the relevant known function or configuration is determined to unnecessarily obscure the important point of the disclosure, the detailed description will be omitted. When "comprise," "have," and "include" described in the specification are used, another part may be added unless "only" is used. The terms of a singular form may include plural forms unless referred to the contrary.

In construing an element, the element is construed as including an error or tolerance range although there is no explicit description of such an error or tolerance range.

In describing a position relationship, For example, when a position relation between two parts is described as, For example, "on," "over," "under," and "next," one or more other parts may be disposed between the two parts unless a more limiting term, such as "just" or "direct(ly)" is used. In the description of embodiments, when a structure is described as being positioned "on or above" or "under or below" another structure, this description should be construed as including a case in which the structures contact each other as well as a case in which a third structure is disposed therebetween.

In describing a time relationship, For example, when the temporal order is described as, For example, "after," "subsequent," "next," and "before,", or the like a case that is not continuous may be included unless a more limiting term, such as "just," "immediate(ly)," or "direct(ly)" is used.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the disclosure.

In describing elements of the disclosure, the terms "first," "second," "A," "B," "(a)," "(b)," etc. may be used. These terms are intended to identify the corresponding elements from the other elements, and basis, order, or number of the corresponding elements should not be limited by these terms. The expression that an element is "connected," "coupled," or "adhered" to another element or layer the element or layer can not only be directly connected or adhered to another element or layer, but also be indirectly connected or adhered to another element or layer with one or more intervening elements or layers "disposed," or "interposed" between the elements or layers, unless otherwise specified.

The term "at least one" should be understood as including any and all combinations of one or more of the associated listed items. For example, the meaning of "at least one of a first item, a second item, and a third item" denotes the combination of all items proposed from two or more of the first item, the second item, and the third item as well as the first item, the second item, or the third item.

Hereinafter, embodiments of the disclosure will be described in detail with reference to the accompanying drawings. In addition, for convenience of description, a scale, size and thickness of each of elements illustrated in the accompanying drawings differs from a real scale, and thus, embodiments of the disclosure are not limited to a scale illustrated in the drawings.

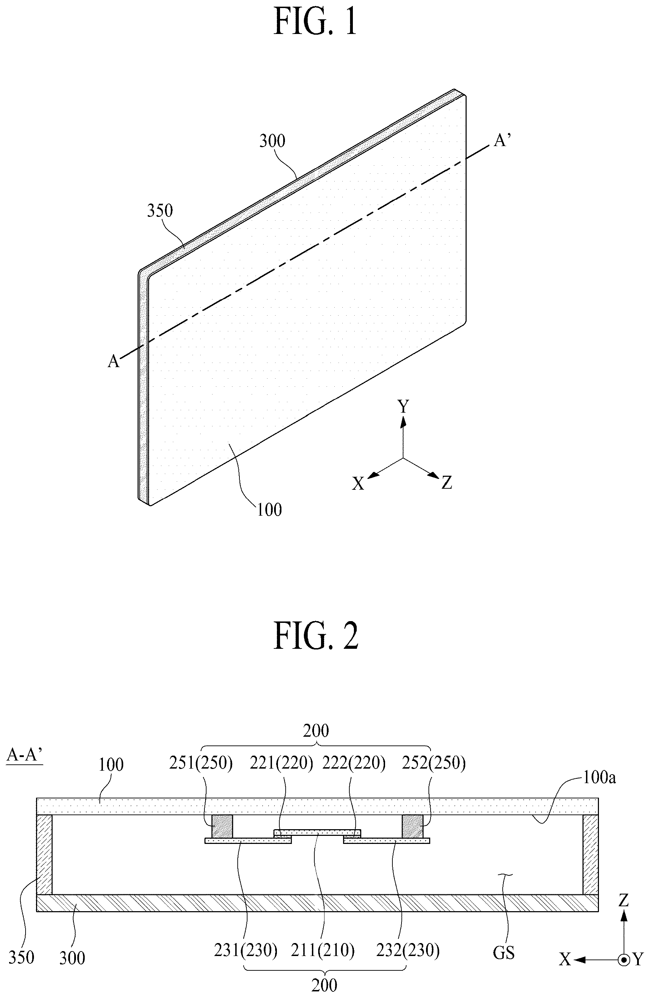

FIG. 1 illustrates an apparatus of an embodiment of the disclosure, and FIG. 2 is a cross-sectional view taken along line A-A' illustrated in FIG. 1.

With reference to FIGs. 1 and 2, the apparatus of an embodiment of the disclosure may include a passive vibration member 100 and a vibration apparatus 200.

The apparatus of an embodiment of the disclosure may be a display apparatus, a sound apparatus, a sound generating apparatus, a sound bar, an analog signage, or a digital signage, or the like, but embodiments of the disclosure are not limited thereto.

The display apparatus may include a display panel including a plurality of pixels which implement a black/white or color image and a driving part for driving the display panel. For example, the display panel may be an organic light-emitting display panel, a light-emitting diode display panel, an electrophoresis display panel, an electro-wetting display panel, a micro light-emitting diode display panel, or a quantum dot light-emitting display panel, or the like, but embodiments of the disclosure are not limited thereto. For example, in the organic light-emitting display panel, a pixel may include an organic light-emitting device such as an organic light-emitting layer or the like, and the pixel may be a subpixel which implements any one of a plurality of colors configuring a color image.

Thus, an apparatus of a first embodiment of the disclosure may include a set device (or a set apparatus) or a set electronic device such as a notebook computer, a TV, a computer monitor, an equipment apparatus including an automotive apparatus or another type apparatus for vehicles, or a mobile electronic device such as a smartphone, or an electronic pad, or the like which is a complete product (or a final product) including a display panel such as an organic light-emitting display panel, a liquid crystal display panel, or the like.

The analog signage may be an advertising signboard, a poster, a noticeboard, or the like. The analog signage may include signage content such as a sentence, a picture, and a sign, or the like. The signage content may be disposed at the passive vibration member 100 of the apparatus to be visible. For example, the signage content may be directly attached on the passive vibration member 100 and the signage content may be printed or the like on a medium such as paper, and the medium may be attached on or put in front of the passive vibration member 100

The passive vibration member 100 may vibrate based on driving (or vibration or displacing) of the vibration apparatus 200. For example, the passive vibration member 100 may generate one or more of a vibration and a sound based on driving of the vibration apparatus 200.

The passive vibration member 100 of an embodiment of the disclosure may be a display panel including a display area (or a screen) having a plurality of pixels which implement a black/white or color image. Thus, the passive vibration member 100 may generate one or more of a vibration and a sound based on driving of the vibration apparatus 200. For example, the passive vibration member 100 may vibrate based on a vibration of the vibration apparatus 200 while a display area is displaying an image, and thus, may generate or output a sound synchronized with the image displayed on the display area.

The passive vibration member 100 of another embodiment of the disclosure may be a non-display panel instead of a display panel. For example, the passive vibration member 100 may be a vibration plate which includes one or more materials of wood, rubber, plastic, flexible glass, fiber, cloth, paper, metal, carbon, a mirror, and leather, but embodiments of the disclosure are not limited thereto. So, the passive vibration member 100 can have any structural form being a plate or a three dimensional from, e.g. for covering something.

The passive vibration member 100 of an embodiment of the disclosure may be a vibration object, a display member, a display panel, a signage panel, a passive vibration plate, a front cover, a front member, a vibration panel, a sound panel, or a passive vibration panel, but embodiments of the disclosure are not limited thereto.

The vibration apparatus 200 may be configured to vibrate the passive vibration member 100. The vibration apparatus 200 may be configured to be connected to a rear surface of the passive vibration member 100. Accordingly, the vibration apparatus 200 may vibrate the passive vibration member 100 to generate or output one or more of a vibration and a sound based on a vibration of the passive vibrating member 100.

The vibration apparatus 200 may be connected to or coupled to the rear surface of the passive vibration member 100. The vibration apparatus 200 may be configured to vibrate the passive vibration member 100 based on a synthesis vibration (or displacement) of a plurality of active vibration members 210 and 230. For example, the vibration apparatus 200 may include one or more or a the plurality of active vibration members 210 and 230 which are connected with each other so that portions thereof overlap each other, and may be configured to vibrate the passive vibration member 100 based on the synthesis vibration (or displacement) of the plurality of active vibration members 210 and 230. Accordingly, a displacement width (or a vibration width) of the vibration apparatus 200 may increase based on the synthesis vibration (or displacement) of the plurality of active vibration members 210 and 230, and thus, a displacement width (or a vibration width) of the passive vibration member 100 may increase or be maximized, thereby enhancing a sound characteristic and a sound pressure level characteristic of a low-pitched sound band generated based on a vibration of the passive vibration member 100.

The apparatus of an embodiment of the disclosure may further include a supporting member 300 and a coupling member 350.

The supporting member 300 may be disposed at a rear surface 100a of the passive vibration member 100. The supporting member 300 may be disposed at the rear surface 100a of the passive vibration member 100 and may be disposed to cover the vibration apparatus 200. The supporting member 300 may be disposed at the rear surface 100a of the passive vibration member 100 to cover all of the rear surface 100a of the passive vibration member 100 and the vibration apparatus 200.

So, the supporting member 300 may accommodate the vibration apparatus 200 or surround the vibration apparatus 200. There might be a certain space between the supporting member 300 and the vibration apparatus 200. The supporting member 300 may be spaced apart from the rear surface 100a of the passive vibration member 100.

For example, the supporting member 300 may have the same size as the passive vibration member 100. For example, the supporting member 300 may cover a whole rear surface of the passive vibration member 100 with a gap space GS and the vibration apparatus 200 therebetween. The gap space GS may be provided by the coupling member 350 disposed between the passive vibration member 100 and the supporting member 300 facing each other. The gap space GS may be referred to as an air gap, an accommodating space, a vibration space, or a sound sounding box, but embodiments of the disclosure are not limited thereto.

The supporting member 300 may include at least one or more of a glass material, a metal material, and a plastic material or a combination thereof. For example, the supporting member 300 may include a stacked structure in which at least one or more of a glass material, a plastic material, and a metal material is stacked thereof. For example, the supporting member 300 may include a material which has relatively high stiffness or high hardness, compared to the passive vibration member 100. For example, the supporting member 300 may be a rear structure, a supporting structure, a supporting plate, a supporting cover, a rear cover, a housing, or a rear member, but embodiments of the disclosure are not limited thereto.

Each of the passive vibration member 100 and the supporting member 300 may have a square shape or a rectangular shape, but embodiments of the disclosure are not limited thereto, and may have a polygonal shape, a non-polygonal shape, a circular shape, or an oval shape.

For example, when the apparatus of another embodiment of the disclosure is applied to a sound apparatus or a sound bar, each of the passive vibration member 100 and the supporting member 300 may have a rectangular shape where a length of a long side is twice or more times longer than a short side, but embodiments of the disclosure are not limited thereto.

The coupling member 350 may be configured to be connected between a rear periphery portion of the passive vibration member 100 and a front periphery portion of the supporting member 300, and thus, the gap space GS may be provided between the passive vibration member 100 and the supporting member 300 facing each other.

The coupling member 350 of an embodiment of the disclosure may include an elastic material which has adhesive properties and is capable of compression and decompression. For example, the coupling member 350 may include a double-sided tape, a single-sided tape, or a double-sided adhesive foam pad, but embodiments of the disclosure are not limited thereto, and may include an elastic pad such as a rubber pad or a silicone pad, or the like, which has adhesive properties and is capable of compression and decompression. For example, the coupling member 350 may be formed by elastomer.

According to another embodiment of the disclosure, the supporting member 300 may further include a sidewall portion which supports a rear periphery portion of the passive vibration member 100. The sidewall portion of the supporting member 300 may protrude or be bent toward the rear periphery portion of the passive vibration member 100 from the front periphery portion of the supporting member 300, and thus, the gap space GS may be provided between the passive vibration member 100 and the supporting member 300. For example, the coupling member 350 may be configured to be connected between the sidewall portion of the supporting member 300 and the rear periphery portion of the passive vibration member 100. Accordingly, the supporting member 300 may cover the vibration apparatus 200 and may support the rear surface 100a of the passive vibration member 100. For example, the supporting member 300 may cover the vibration apparatus 200 and may support the rear periphery portion of the passive vibration member 100.

According to another embodiment of the disclosure, the passive vibration member 100 may further include a sidewall portion which is connected to a front periphery portion of the supporting member 300. The sidewall portion of the passive vibration member 100 may protrude or be bent toward the front periphery portion of the supporting member 300 from the rear periphery portion of the passive vibration member 100, and thus, the gap space GS may be provided between the passive vibration member 100 and the supporting member 300. A stiffness of the passive vibration member 100 may be increased based on the sidewall portion. For example, the coupling member 350 may be configured to be connected between the sidewall portion of the passive vibration member 100 and the front periphery portion of the supporting member 300. Accordingly, the supporting member 300 may cover the vibration apparatus 200 and may support the rear surface 100a of the passive vibration member 100. For example, the supporting member 300 may cover the vibration apparatus 200 and may support the rear periphery portion of the passive vibration member 100.

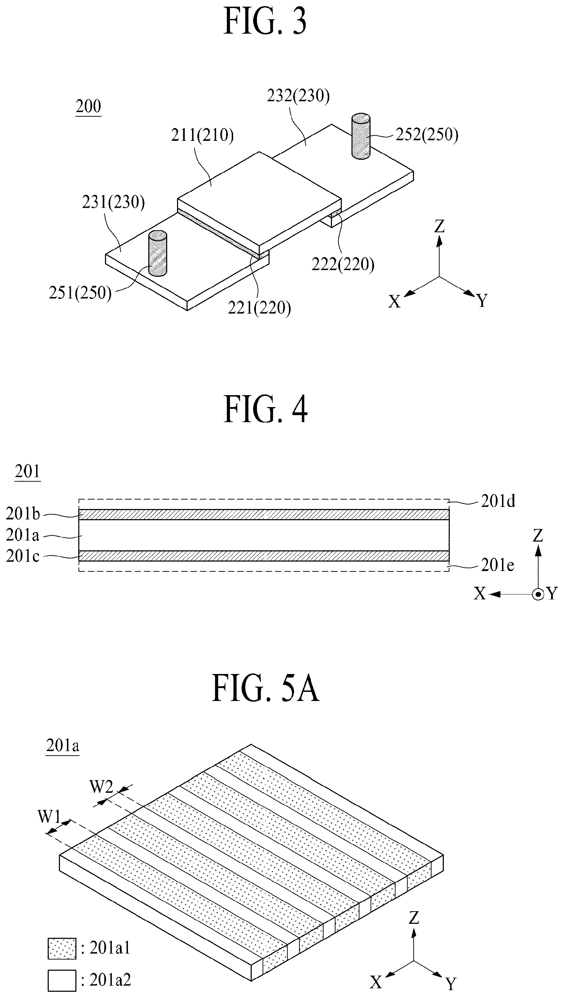

FIG. 3 illustrates a vibration apparatus of a first embodiment of the disclosure of in FIG. 2.

With reference to FIGs. 2 and 3, a vibration apparatus 200 of a first embodiment of the disclosure may include a first vibration portion 210, a second vibration portion 230, and a connection portion 250.

The first vibration portion 210 may be disposed to face a rear surface 100a of the passive vibration member 100. For example, the first vibration portion 210 may be disposed between the rear surface 100a of the passive vibration member 100 and a supporting member 300. For example, the first vibration portion 210 may be disposed between the rear surface 100a of the passive vibration member 100 and the supporting member 300 so as to be spaced apart from the passive vibration member 100 without being directly connected to the passive vibration member 100. For example, the first vibration portion 210 may be a main vibration portion, a center vibration portion, or a first active vibration portion.

The first vibration portion 210 of an embodiment of the disclosure may include a first active vibration member 211. The first active vibration member 211 may have a rectangular shape or a square shape. The first active vibration member 211 may be implemented to vibrate (or displace or drive) in a flexural shape, based on a first driving signal input from the outside.

The second vibration portion 230 may be connected to or coupled to a periphery of the first vibration portion 210. The second vibration portion 230 may overlap a periphery of the first vibration portion 210. For example, the second vibration portion 230 may overlap a portion of the periphery of the first vibration portion 210. For example, the second vibration portion 230 may be connected to or coupled to a periphery portion of the first vibration portion 210. For example, the second vibration portion 230 may be a sub vibration portion, a secondary vibration portion, or a second active vibration portion.

The second vibration portion 230 may include a plurality of second active vibration member 231 and 232. For example, the second vibration portion 230 may include a 2-1^{st} active vibration member 231 and a 2-2^{nd} active vibration member 232. For example, the second vibration portion 230 may include 2N (where N is a natural number) number of second active vibration members 231 and 232. For example, the 2N number of second active vibration members 231 and 232 may include the 2-1^{st} active vibration member 231 and the 2-2^{nd} active vibration member 232. For example, the 2-1^{st} active vibration member 231 and the 2-2^{nd} active vibration member 232 may be a pair of second active vibration members. In the disclosure, the 2-1^{st} active vibration member 231 and the 2-2^{nd} active vibration member 232 may be a second active vibration member and a third active vibration member, but embodiments of the disclosure are not limited to digits "2-1^{st}" and "2-2^{nd}".

Each of the 2-1^{st} active vibration member 231 and the 2-2^{nd} active vibration member 232 may be connected or coupled to a periphery of the first active vibration member 211.

Preferably, the 2-1^{st} active vibration member 231 and the 2-2^{nd} active vibration member 232 may be connected or coupled to a periphery of the first active vibration member 211 in parallel with a center portion (or a center region) of the first active vibration member 211 therebetween. For example, the 2-1^{st} active vibration member 231 and the 2-2^{nd} active vibration member 232 may be connected or coupled to the periphery of the first active vibration member 211 to be symmetric with each other with the center portion of the first active vibration member 211 therebetween.

Each of the 2-1^{st} active vibration member 231 and the 2-2^{nd} active vibration member 232 may include a first connection region and a second connection region, which are parallel or symmetric with each other with the center portion therebetween. The first connection region may include at least a portion of a first periphery portion of each of the 2-1^{st} active vibration member 231 and the 2-2^{nd} active vibration member 232 overlapping the periphery of the first active vibration member 211. The second connection region may include at least a portion of a second periphery portion of each of the 2-1^{st} active vibration member 231 and the 2-2^{nd} active vibration member 232 connected to the passive vibration member 100.

According to an embodiment of the disclosure, each of the passive vibration member 100 and the supporting member 300 may have a square shape or a rectangular shape, but embodiments of the disclosure are not limited thereto. For example, each of the 2-1^{st} active vibration member 231 and the 2-2^{nd} active vibration member 232 may have a polygonal shape, a non-polygonal shape, a circular shape, or an oval shape where the 2-1^{st} active vibration member 231 and the 2-2^{nd} active vibration member 232 are symmetric with each other with respect to the center portion of the first active vibration member 211. For example, each of the 2-1^{st} active vibration member 231 and the 2-2^{nd} active vibration member 232 may be configured to have the same shape and the same size as the first active vibration member 211, but embodiments of the disclosure are not limited thereto. For example, each of the 2-1^{st} active vibration member 231 and the 2-2^{nd} active vibration member 232 may be configured to have the same shape as and different size from the first active vibration member 211, but embodiments of the disclosure are not limited thereto.

Each of the 2-1^{st} active vibration member 231 and the 2-2^{nd} active vibration member 232 may be implemented to vibrate (or displace) in a flexural shape, based on the same second driving signal, but embodiments of the disclosure are not limited thereto. For example, the 2-1^{st} active vibration member 231 and the 2-2^{nd} active vibration member 232 may be implemented to vibrate (or displace) based on different second driving signals, and thus, may change a vibration width of a vibration and a displacement force transferred to the passive vibration member 100 to implement sounds of various-pitched sound bands.

According to an embodiment of the disclosure, the second driving signal applied to each of the 2-1^{st} active vibration member 231 and the 2-2^{nd} active vibration member 232 may be the same as or different from the first driving signal applied to the first active vibration member 211. As an embodiment of the disclosure, the first driving signal may have the same phase (or in-phase) as the second driving signal, or may have opposite phases (or anti-phases) with respect to a phase of the second driving signal. As another embodiment of the disclosure, the first driving signal and the second driving signal may have the same period and may have the same amplitude or different amplitudes, but embodiments of the disclosure are not limited thereto.

Each of the first active vibration member 211, the 2-1^{st} active vibration member 231, and the 2-2^{nd} active vibration member 232 may include a vibration device.

The vibration device may vibrate (or displace or drive) based on a driving signal input thereto. The vibration device may vibrate (or displace or drive) as contraction and expansion are alternately repeated based on a piezoelectric effect (or a piezoelectric characteristic) according to a driving signal applied from the outside. The driving signal may be an alternating current (AC) signal such as a sound signal, a vibration driving signal, or a voice signal, or the like. The vibration device of the first active vibration member 211 may vibrate (or displace or drive) based on a first driving signal input thereto. The vibration device of each of the 2-1^{st} active vibration member 231 and the 2-2^{nd} active vibration member 232 may vibrate (or displace or drive) together based on a second driving signal input thereto.

The vibration device of an embodiment of the disclosure may be a single-layer vibration device or a stack type vibration device, but embodiments of the disclosure are not limited. The vibration device may include one or more piezoelectric devices having a piezoelectric characteristic. The piezoelectric device may be a device which is displaced by an inverse piezoelectric effect when a driving signal (or a voltage) based on a sound signal input thereto is input thereto. The piezoelectric device may be a device which is flexurally displaced (or flexurally vibrated or flexurally driven) based on a voltage like bimorph and unimorph, or the like.

The second vibration portion 230 may be coupled to or attached on the periphery of the first vibration portion 210 by an adhesive member 220. Each of the 2-1^{st} active vibration member 231 and the 2-2^{nd} active vibration member 232 may be coupled to or attached on the periphery of the first active vibration member 211 by the adhesive member 220. Accordingly, each of the 2-1^{st} active vibration member 231 and the 2-2^{nd} active vibration member 232 may be connected to the first active vibration member 211 by the adhesive member 220, and thus, may receive a vibration (or displacement) of the first active vibration member 211 to vibrate (or displace).

The adhesive member 220 may be disposed or interposed between the first active vibration member 211 and each of the 2-1^{st} active vibration member 231 and the 2-2^{nd} active vibration member 232. The adhesive member 220 may be disposed or interposed between a front periphery portion of the first active vibration member 211 and a periphery portion of each of the 2-1^{st} active vibration member 231 and the 2-2^{nd} active vibration member 232. The adhesive member 220 of an embodiment of the disclosure may include a first adhesive member 221 and a second adhesive member 222.

The first adhesive member 221 may be disposed or interposed between the 2-1^{st} active vibration member 231 and the first active vibration member 211. For example, the first adhesive member 221 may be connected between the first connection region of the 2-1^{st} active vibration member 231 and a first periphery portion of the first active vibration member 211. For example, the first adhesive member 221 may be connected between a first front periphery portion of the 2-1^{st} active vibration member 231 and a first rear periphery portion of the first active vibration member 211. Accordingly, the first periphery portion of the 2-1^{st} active vibration member 231 may be connected to the first periphery portion of the first active vibration member 211 by the first adhesive member 221, and thus, may vibrate (or displace) based on a vibration (or displacement) of the first active vibration member 211.

The second adhesive member 222 may be disposed or interposed between the 2-2^{nd} active vibration member 232 and the first active vibration member 211. For example, the second adhesive member 222 may be connected between the first connection region of the 2-2^{nd} active vibration member 232 and a second periphery portion of the first active vibration member 211. For example, the second adhesive member 222 may be connected between a first front periphery portion of the 2-2^{nd} active vibration member 232 and a second rear periphery portion of the first active vibration member 211. Accordingly, the first periphery portion of the 2-2^{nd} active vibration member 232 may be connected to the second periphery portion of the first active vibration member 211 by the second adhesive member 222, and thus, may vibrate (or displace) based on a vibration (or displacement) of the first active vibration member 211.

According to another embodiment of the disclosure, the adhesive member 220 may be disposed or interposed between the front periphery portion of the first active vibration member 211 and the rear periphery portion of each of the 2-1^{st} active vibration member 231 and the 2-2^{nd} active vibration member 232. For example, the first adhesive member 221 may be connected between the first rear periphery portion of the 2-1^{st} active vibration member 231 and the first front periphery portion of the first active vibration member 211. For example, the second adhesive member 222 may be connected between the first rear periphery portion of the 2-2^{nd} active vibration member 232 and the second front periphery portion of the first active vibration member 211.

Each of the first adhesive member 221 and the second adhesive member 222 of an embodiment of the disclosure may be configured as an adhesive material capable of compression and decompression. For example, each of the first adhesive member 221 and the second adhesive member 222 may be configured as an adhesive material which is low in elastic modulus. Each of the first adhesive member 221 and the second adhesive member 222 may be configured as an adhesive resin material, an adhesive, or an adhesive tape, or the like, but embodiments of the disclosure are not limited thereto. The adhesive resin material may include one of an epoxy-based resin material, an acrylic-based resin material, and a silicone-based resin material, but embodiments of the disclosure are not limited thereto. For example, each of the first adhesive member 221 and the second adhesive member 222 may include an acrylic adhesive material having a characteristic which is relatively good in adhesive force and high in hardness of acrylic and urethane so that a vibration of the first active vibration member 211 is well transferred to the first periphery portion of each of the 2-1^{st} active vibration member 231 and the 2-2^{nd} active vibration member 232, but embodiments of the disclosure are not limited thereto.

The adhesive resin, the adhesive, or the adhesive layer of the adhesive member 220 of an embodiment of the disclosure may include a photo-curable adhesive material, but embodiments of the disclosure are not limited thereto. For example, the adhesive resin, the adhesive, or the adhesive layer of the adhesive member 220 may be an ultraviolet (UV) adhesive, but embodiments of the disclosure are not limited thereto.

The connection portion 250 may be connected or coupled to a periphery of the second vibration portion 230 and the rear surface 100a of the passive vibration member 100. For example, the connection portion 250 may include 2N (where N is a natural number) number of connection members 251 and 252 which are connected to each of the passive vibration member 100 and the 2N number of second active vibration members 231 and 232. The connection portion 250 may include a first connection member 251 and a second connection member 252 which are connected to the passive vibration member 100 and each of the 2-1^{st} active vibration member 231 and the 2-2^{nd} active vibration member 232. For example, the 2N number of connection members 251 and 252 may include a first connection member 251 and a second connection member 252.

Each of the first and second connection members 251 and 252 may have a polygonal pillar shape or a circular pillar shape, but embodiments of the disclosure are not limited thereto. According to an embodiment of the disclosure, each of the first and second connection members 251 and 252 may include an elastic material having elasticity or flexibility. For example, each of the first and second connection members 251 and 252 may be configured as an elastic body having an elastic modulus (or Young's modulus) which is lower than each of the 2-1^{st} active vibration member 231 and the 2-2^{nd} active vibration member 232. For example, each of the first and second connection members 251 and 252 may include a double-sided tape, a single-sided tape, or a double-sided adhesive foam pad, but embodiments of the disclosure are not limited thereto, and may include an elastic pad such as a rubber pad or a silicone pad, or the like, which has adhesive properties and is capable of compression and decompression. For example, an adhesive layer of each of the first and second connection members 251 and 252 may include an acrylic-based adhesive material having a characteristic which is relatively good in adhesive force and high in hardness, but embodiments of the disclosure are not limited thereto. For example, each of the first and second connection members 251 and 252 may be formed by elastomer.

The first connection member (or a first elastic member) 251 may be disposed or connected between the 2-1^{st} active vibration member 231 and the passive vibration member 100. For example, the first connection member 251 may be connected between the second connection region of the 2-1^{st} active vibration member 231 and the rear surface 100a of the passive vibration member 100. For example, the first connection member 251 may be connected between the second front periphery portion of the 2-1^{st} active vibration member 231 and the rear surface 100a of the passive vibration member 100. Accordingly, the second periphery portion of the 2-1^{st} active vibration member 231 may be connected to the passive vibration member 100 by the first connection member 251, and thus, may vibrate (or displace or drive) the passive vibration member 100 based on vibrations of the first active vibration member 211 and the 2-1^{st} active vibration member 231. In addition, mass of both ends of the 2-1^{st} active vibration member 231 may increase due to the first connection member 251 and the first active vibration member 211 and elasticity may increase based on a composite action of a modulus of the first connection member 251 and a self-modulus of the first active vibration member 211, and thus, a vibration width (or a displacement width) may increase.

The second connection member (or a second elastic member) 252 may be disposed or connected between the 2-2^{nd} active vibration member 232 and the passive vibration member 100. For example, the second connection member 252 may be connected between the second connection region of the 2-2^{nd} active vibration member 232 and the rear surface 100a of the passive vibration member 100. For example, the second connection member 252 may be connected between the second front periphery portion of the 2-2^{nd} active vibration member 232 and the rear surface 100a of the passive vibration member 100. Accordingly, the second periphery portion of the 2-2^{nd} active vibration member 232 may be connected to the passive vibration member 100 by the second connection member 252, and thus, may vibrate (or displace or drive) the passive vibration member 100 based on vibrations of the first active vibration member 211 and the 2-2^{nd} active vibration member 232. In addition, mass of both ends of the 2-2^{nd} active vibration member 232 may increase due to the second connection member 252 and the first active vibration member 211 and elasticity may increase based on a composite action of a modulus of the second connection member 252 and a self-modulus of the first active vibration member 211, and thus, a vibration width (or a displacement width) may increase.

As described above, the vibration apparatus 200 of the first embodiment of the disclosure may have a large vibration width (or a large displacement width) based on a synthesis vibration (or a composite vibration) of the 2-1^{st} active vibration member 231 and the 2-2^{nd} active vibration member 232 in driving (or vibrating or displacing), and thus, a vibration width (or a displacement width) of the passive vibration member 100 may increase, thereby enhancing a sound characteristic and/or a sound pressure level characteristic of the low-pitched sound band generated based on a vibration of the passive vibration member 100.

FIG. 4 illustrates a vibration device of an embodiment of the disclosure. FIG. 4 illustrates a vibration device of an active vibration member illustrated in FIGs. 2 and 3.

With reference to FIGs. 2 to 4, each of the first active vibration member 211, the 2-1^{st} active vibration member 231, and the 2-2^{nd} active vibration member 232 may include a vibration device 201.

The vibration device 201 may be a single-layer vibration device. The single-layer vibration device may include a piezoelectric layer 201a, one or more first electrodes (or a first electrode layer) 201b disposed at a first surface of the piezoelectric layer 201a, and one or more second electrodes (or a second electrode layer) 201c disposed at a second surface different from the first surface of the piezoelectric layer 201a. For example, the piezoelectric layer 201a may include a front surface and a rear surface. For example, the first surface of the piezoelectric layer 201a may be a first region of the front surface (or the rear surface) of the piezoelectric layer 201a, and the second surface of the piezoelectric layer 201a may be a second region which is spaced apart from the first region among the front surface (or the rear surface) of the piezoelectric layer 201a. For example, the first surface of the piezoelectric layer 201a may be the front surface of the piezoelectric layer 201a, and the second surface of the piezoelectric layer 201a may be the rear surface of the piezoelectric layer 201a.

The single-layer vibration device 201 may further include a first protection member 201d covering a first electrode 201b and a second protection member 201e covering a second electrode 201c. The first protection member 201d may be attached on the first electrode 201b by an adhesive layer. Alternatively, the first electrode 201b may be implemented at the first protection member 201d and may be electrically connected to the first surface of a piezoelectric layer 201a by a conductive adhesive member. The second protection member 201e may be attached on the second electrode 201c by an adhesive layer. Alternatively, the second electrode 201c may be implemented at the second protection member 201e and may be electrically connected to the second surface of a piezoelectric layer 201a by a conductive adhesive member.

In the vibration device 201 of the first active vibration member 211, any one of the first protection member 201d and the second protection member 201e may be connected to or attached on any one of the first protection member 201d and the second protection member 201e, configured at the vibration device 201 of each of the 2-1^{st} active vibration member 231 and the 2-2^{nd} active vibration member 232, through the adhesive member 220. In each of the 2-1^{st} active vibration member 231 and the 2-2^{nd} active vibration member 232, any one of the first protection member 201d and the second protection member 201e of the vibration device 201 may be connected to or coupled to the passive vibration member 100 through the connection portion 250.

Alternatively, the vibration device 201 of another embodiment of the disclosure may be a stack-type vibration device. The stack-type vibration device 201 may include a plurality of piezoelectric devices. For example, an electrode interposed (or disposed) between two piezoelectric devices vertically adjacent to each other among a plurality of piezoelectric devices may be used as a common electrode which applies the same driving signal to each of the two piezoelectric devices vertically adjacent to each other, but embodiments of the disclosure are not limited thereto. For example, an insulation layer having elasticity may be interposed (or disposed) between the two piezoelectric devices vertically adjacent to each other among the plurality of piezoelectric devices. For example, the insulation layer having elasticity may increase a mass of the piezoelectric device or the vibration device 201, and thus, may act as a mass which reduces a resonance frequency (or a natural frequency) of the piezoelectric device or the vibration device 201. In the vibration device 201 of another embodiment of the disclosure, an uppermost piezoelectric device of the plurality of piezoelectric devices may be covered by the first protection member 201d, and a lowermost piezoelectric device of the plurality of piezoelectric devices may be covered by the second protection member 201e.

The piezoelectric layer 201a of an embodiment of the disclosure may be a piezoelectric portion, a piezoelectric structure, a piezoelectric sheet, a piezoelectric ceramic sheet, a piezoelectric plate, a piezoelectric ceramic plate, a vibration generating portion, a displacement portion, a displacement layer, a piezoelectric vibration structure, or a vibration structure, but embodiments of the disclosure are not limited thereto.

Material of the piezoelectric layer 201a of an embodiment of the disclosure is not limited thereto, but may include a piezoelectric material of a ceramic-based material capable of implementing a relatively high vibration, or may include a piezoelectric ceramic material having a perovskite-based crystal structure. For example, the piezoelectric layer 201a may be configured as a piezoelectric material including lead (Pb) or a piezoelectric material not including lead (Pb). For example, the piezoelectric material including lead (Pb) may include one or more of a lead zirconate titanate (PZT)-based material, a lead zirconate nickel niobate (PZNN)-based material, a lead magnesium niobate (PMN)-based material, a lead nickel niobate (PNN)-based material, a lead zirconate niobate (PZN)-based material, or a lead indium niobate (PIN)-based material, but embodiments of the disclosure are not limited thereto. For example, the piezoelectric material not including lead (Pb) may include one or more of barium titanate (BaTiO₃), calcium titanate (CaTiO₃), and strontium titanate (SrTiO₃), but embodiments of the disclosure are not limited thereto.

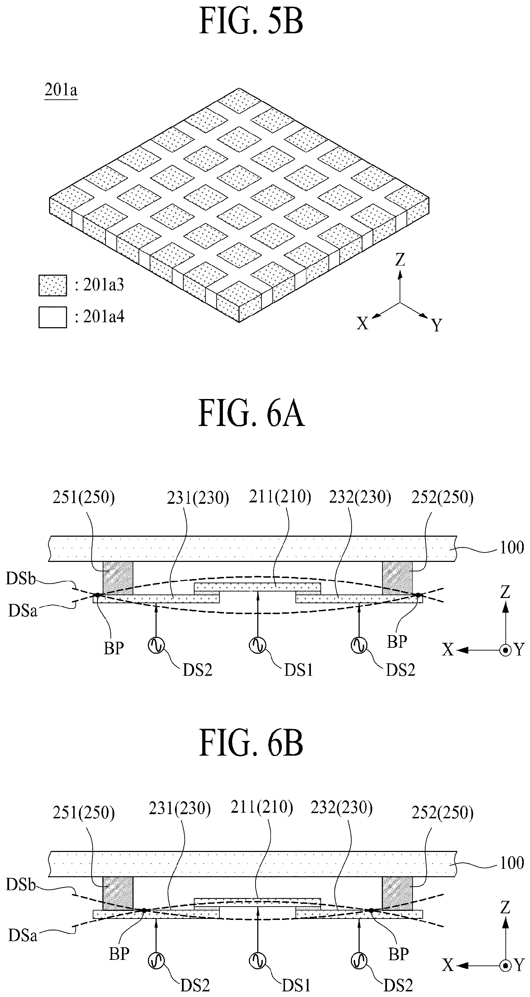

FIGs. 5A and 5B illustrate first and second modification embodiments of the piezoelectric layer illustrated in FIG. 4.

With reference to FIGs. 4 and 5A, the piezoelectric layer 201a of the first modification embodiment of the disclosure may include a plurality of first portions 201a1 and a plurality of second portions 201a2. For example, the plurality of first portions 201a1 and the plurality of second portions 201a2 may be alternately and repeatedly arranged along a first direction X (or a second direction Y). For example, the first direction X may be a widthwise direction of the vibration device 201, the second direction Y may be a lengthwise direction of the vibration device 201, but embodiments of the disclosure are not limited thereto. For example, the first direction X may be the lengthwise direction of the vibration device 201, and the second direction Y may be the widthwise direction of the vibration device 201.

Each of the plurality of first portions 201a1 may include an inorganic material having a piezoelectric effect (or a piezoelectric characteristic). For example, each of the plurality of first portions 201a1 may include a piezoelectric material, a composite piezoelectric material, or an electroactive material. For example, each of the plurality of first portions 201a1 may be an inorganic portion, an inorganic material portion, a piezoelectric portion, a piezoelectric material portion, or an electroactive portion.

According to an embodiment of the disclosure, each of the plurality of first portions 201a1 may have a first width W1 parallel to the first direction X and may extend along a second direction Y intersecting the first direction X. Each of the plurality of first portions 201a1 may include a piezoelectric material which is be substantially the same as the piezoelectric layer 201a described above with reference to FIG. 4, and thus, the repetitive description thereof may be omitted.

Each of the plurality of second portion 201a2 may be disposed between the plurality of first portions 201a1. For example, each of the plurality of first portion 201a1 may be disposed between two adjacent second portions 201a2 of the plurality of second portion 201a2. Each of the plurality of second portions 201a2 may have a second width W2 parallel to the first direction X (or the second direction Y) and may extend along the second direction Y (or the first direction X). The first width W1 may be the same as or different from the second width W2. For example, the first width W1 may be greater than the second width W2. For example, the first portion 201a1 and the second portion 201a2 may include a line shape or a stripe shape which has the same size or different sizes.

Each of the plurality of second portions 201a2 may be configured to fill a gap between two adjacent first portions of the plurality of first portions 201a1. Each of the plurality of second portions 201a2 may be configured to fill a gap between two adjacent first portions of the plurality of first portions 201a1 and may be connected to or attached at a first portion 201a1 adjacent thereto. According to an embodiment of the disclosure, each of the plurality of first portions 201a1 and the plurality of second portions 201a2 may be disposed (or arranged) at the same plane (or the same layer) in parallel with each other.

According to an embodiment of the disclosure, each of the plurality of second portions 201a2 may absorb an impact applied to the first portions 201a1, and thus, may enhance the total durability of the first portions 201a1 and provide flexibility to the vibration device 201. Each of the plurality of second portions 201a2 may include an organic material having a flexible characteristic. For example, each of the plurality of second portions 201a2 may include one or more of an epoxy-based polymer, an acrylic-based polymer, and a silicone-based polymer, but embodiments of the disclosure are not limited thereto. For example, each of the plurality of second portions 201a2 may be an organic portion, an organic material portion, an adhesive portion, an elastic portion, a bending portion, a damping portion, or a flexible portion, but embodiments of the disclosure are not limited thereto.

A first surface of each of the plurality of first portions 201a1 and the plurality of second portions 201a2 may be connected to the first electrode 201b in common. A second surface of each of the plurality of first portions 201a1 and the plurality of second portions 201a2 may be connected to the second electrode 201c in common.

The plurality of first portions 201a1 and the plurality of second portion 201a2 may be disposed on (or connected to) the same plane, and thus, the piezoelectric layer 201a of the first modification embodiment of the disclosure may have a single thin film-type. Accordingly, the vibration device 201 including the piezoelectric layer 201a of the first modification embodiment of the disclosure may be vibrated in a vertical direction by the first portions 201a1 having a vibration characteristic and may be bent in a curved shape by the second portions 201a2 having flexibility. For example, the vibration device 201 including the piezoelectric layer 201a of the first modification embodiment of the disclosure may have a 2-2 composite structure, and thus, may have a resonance frequency of 20 kHz or less, but embodiments of the disclosure are not limited thereto.

With reference to FIGs. 2 to 4 and 5A, when each of the vibration device 201 of the first active vibration member 211, the vibration device 201 of the 2-1^{st} active vibration member 231, and the vibration device 201 of the 2-2^{nd} active vibration member 232 includes a piezoelectric layer 201a of the first modification embodiment of the disclosure, at least one or more first portions 201a1 disposed at the first and second periphery portions of the vibration device 201 of the first active vibration member 211 may overlap at least a portion of at least one or more first portion 201a1 configured at each of the vibration device 201 of the 2-1^{st} active vibration member 231 and the vibration device 201 of the 2-2^{nd} active vibration member 232. Accordingly, a vibration of the first active vibration member 211 may be efficiently transferred to each of the 2-1^{st} active vibration member 231 and the 2-2^{nd} active vibration member 232.

With reference to FIGs. 4 and 5B, a piezoelectric layer 201a of the second modification embodiment of the disclosure may include a plurality of first portions 201a3, and a second portion 201a4 disposed between the plurality of first portions 201a3.

Each of the plurality of first portions 201a3 may be disposed to be spaced apart from one another along each of the first direction X and the second direction Y. For example, each of the plurality of first portions 201a3 may have a hexahedral shape (or a six-sided object shape) having the same size and may be disposed in a lattice shape. Each of the plurality of first portions 201a3 may include a piezoelectric material which is be substantially the same as the first portion 201a1 described above with reference to FIG. 5A, and thus, the repetitive description thereof may be omitted.

The second portion 201a4 may be disposed between the plurality of first portions 201a3 along each of the first direction X and the second direction Y. The second portion 201a4 may be configured to fill a gap or a space between two adjacent first portions 201a3 or to surround each of the plurality of first portions 201a3, and thus, the second portion 201a4 may be connected to or attached on an adjacent first portion 201a3. The second portion 201a4 may include an organic material which is be substantially the same as the second portions 201a2 described above with reference to FIG. 5A, and thus, the repetitive description thereof may be omitted.

A first surface of each of the plurality of first portions 201a3 and the second portion 201a4 may be connected to the first electrode 201b in common. A second surface of each of the plurality of first portions 201a3 and the second portion 201a4 may be connected to the second electrode 201c in common.

The plurality of first portions 201a3 and the second portion 201a4 may be disposed on (or connected to) the same plane, and thus, the piezoelectric layer 201a of the second modification embodiment of the disclosure may have a single thin film-type. Accordingly, the vibration device 201 including the piezoelectric layer 201a of the second modification embodiment of the disclosure may be vibrated in a vertical direction by the first portions 201a1 having a vibration characteristic and may be bent in a curved shape by the second portions 201a4 having flexibility. For example, the vibration device 201 including the piezoelectric layer 201a of the second modification embodiment of the disclosure may have a 1-3 composite structure, and thus, may have a resonance frequency of 20 kHz or less, but embodiments of the disclosure are not limited thereto.

With reference to FIGs. 2 to 4 and 5B, when each of the vibration device 201 of the first active vibration member 211, the vibration device 201 of the 2-1^{st} active vibration member 231, and the vibration device 201 of the 2-2^{nd} active vibration member 232 includes a piezoelectric layer 201a of the second modification embodiment of the disclosure, at least one or more first portions 201a3 disposed at the first and second periphery portions of the vibration device 201 of the first active vibration member 211 may overlap at least a portion of at least one or more first portion 201a3 configured at each of the vibration device 201 of the 2-1^{st} active vibration member 231 and the vibration device 201 of the 2-2^{nd} active vibration member 232. Accordingly, a vibration of the first active vibration member 211 may be efficiently transferred to each of the 2-1^{st} active vibration member 231 and the 2-2^{nd} active vibration member 232.

FIGs. 6A and 6B are diagrams illustrating a displacement point and a vibration width (or a displacement width) of a vibration apparatus based on a driving signal applied to each of the first vibration portion and the second vibration portion illustrated in FIGs. 2 and 3.

With reference to FIGs. 2 and 6A, a first driving signal DS1 applied to the first vibration portion 210 may have the same phase as a second driving signal DS2 applied to the second vibration portion 230. Accordingly, the first active vibration member 211 of the first vibration portion 210 and the 2-1^{st} active vibration member 231 and the 2-2^{nd} active vibration member 232 of the second vibration portion 230 may each be displaced (or flexed or vibrated) in the same shape as each other.

When driving signals DS1 and DS2 applied to each of the first active vibration member 211, the 2-1^{st} active vibration member 231, and the 2-2^{nd} active vibration member 232 have the same phase, a total vibration width (or displacement width) of the vibration apparatus 200 may be added to a vibration width (or displacement width) of the first active vibration member 211 and a vibration width (or displacement width) of the 2-1^{st} active vibration member 231 (or the 2-2^{nd} active vibration member 232), and thus, may be increased. For example, a vibration of the first active vibration member 211 and a vibration of each of the 2-1^{st} active vibration member 231 and the 2-2^{nd} active vibration member 232 may be reinforced with each other, and thus, a vibration width (or displacement width) of the vibration apparatus 200 based on a vibration of the first vibration portion 210 and the second vibration portion 230 may be increased.

According to an embodiment of the disclosure, when a first driving signal DS1 of a positive is applied to the first active vibration member 211, and simultaneously, a second driving signal DS2 of a positive having the same phase as that of the first driving signal DS1 of th positive is applied to each of the 2-1^{st} active vibration member 231 and the 2-2^{nd} active vibration member 232, the first vibration portion 210 and the second vibration portion 230 may be displaced in a first shape (or a convex shape) DSa, and a second periphery portion of each of the 2-1^{st} active vibration member 231 and the 2-2^{nd} active vibration member 232 may be displaced in a direction toward (or closer to) the supporting member 300. On the other hand, when a first driving signal DS1 of a negative is applied to the first active vibration member 211, and simultaneously, a second driving signal DS2 of a negative having the same phase as that of the first driving signal DS1 of a negative is applied to each of the 2-1^{st} active vibration member 231 and the 2-2^{nd} active vibration member 232, the first vibration portion 210 and the second vibration portion 230 may be displaced in a second shape (or a concave shape) DSb opposite to the first shape DSa, and the second periphery portion of each of the 2-1^{st} active vibration member 231 and the 2-2^{nd} active vibration member 232 may be displaced in a direction toward (or closer to) the passive vibration member 100.

Therefore, when driving signals having the same phase are applied to the first vibration portion 210 and the second vibration portion 230, a displacement point BP at which the first shape (or a first vibration shape) DSa of each of the first vibration portion 210 and the second vibration portion 230 displaced by the driving signals DS1 and DS2 of the positive intersects with the second shape (or a second vibration shape) DSb of each of the first vibration portion 210 and the second vibration portion 230 displaced by the driving signals DS1 and DS2 of the negative may be disposed (or located) outside (or an outer portion) of the connection members 251 and 252. Accordingly, when driving signals having the same phase are applied to the first vibration portion 210 and the second vibration portion 230, a vibration width (or displacement amount) of the vibration apparatus 200 may increase, and thus, a vibration width (or displacement amount) of the passive vibration member 100 may increase, thereby enhancing a sound characteristic and a sound pressure level characteristic of the low-pitched sound band generated based on a vibration of the passive vibration member 100.

With reference to FIGs. 2 and 6B, a first driving signal DS1 applied to the first vibration portion 210 may have the opposite phase (or anti-phase) as a second driving signal DS2 applied to the second vibration portion 230. Accordingly, the first active vibration member 211 of the first vibration portion 210 and the 2-1^{st} active vibration member 231 and the 2-2^{nd} active vibration member 232 of the second vibration portion 230 may each be displaced (or flexed or vibrated) in a shape which differs from each other.

When the second driving signal DS2 applied to each of the 2-1^{st} active vibration member 231 and the 2-2^{nd} active vibration member 232 has an anti-phase of the first driving signal DS1 applied to the first active vibration member 211, a total vibration width (or displacement amount) of the vibration apparatus 200 may be reduced as a vibration width (or displacement amount) of the 2-1^{st} active vibration member 231 (or the 2-2^{nd} active vibration member 232) is restricted by a vibration width (or displacement amount) of the first active vibration member 211. For example, a vibration of each of the 2-1^{st} active vibration member 231 and the 2-2^{nd} active vibration member 232 may be interfered by a vibration of the first active vibration member 211, and thus, a vibration width of the vibration apparatus 200 based on a vibration of each of the first vibration portion 210 and the second vibration portion 230 may be reduced.

According to an embodiment of the disclosure, when a first driving signal DS1 of a positive is applied to the first active vibration member 211, and simultaneously, a second driving signal DS2 of a negative having the opposite phase (or anti-phase) as that of the first driving signal DS1 of the positive is applied to each of the 2-1^{st} active vibration member 231 and the 2-2^{nd} active vibration member 232, the first vibration portion 210 and the second vibration portion 230 may be displaced in the second shape DSb, and a second periphery portion of each of the 2-1^{st} active vibration member 231 and the 2-2^{nd} active vibration member 232 may be displaced in a direction toward (or closer to) the passive vibration member 100. On the other hand, when a first driving signal DS1 of a negative is applied to the first active vibration member 211, and simultaneously, a second driving signal DS2 of a positive having the opposite phase (or anti-phase) as that of the first driving signal DS1 of the negative is applied to each of the 2-1^{st} active vibration member 231 and the 2-2^{nd} active vibration member 232, the first vibration portion 210 and the second vibration portion 230 may be displaced in the first shape DSa, and the second periphery portion of each of the 2-1^{st} active vibration member 231 and the 2-2^{nd} active vibration member 232 may be displaced in a direction toward (or closer to) the supporting member 300.

Therefore, when driving signals having the opposite phase (or anti-phase) are applied to the first vibration portion 210 and the second vibration portion 230, the displacement point BP at which the first shape DSa and the second shape DSb of the first vibration portion 210 and the second vibration portion 230 intersect with each other may be disposed (or located) inside (or an inner portion) of the connection members 251 and 252, or may be disposed (or located) a region between the first vibration portion 210 and the connection members 251 and 252. Accordingly, when driving signals having the opposite phase (or anti-phase) are applied to the first vibration portion 210 and the second vibration portion 230, a vibration width (or displacement amount) of the vibration apparatus 200 may decrease, and thus, a vibration width (or displacement amount) of the passive vibration member 100 may decrease, thereby enhancing a sound characteristic and a sound pressure level characteristic of a middle-low-pitched sound band or a middle-high-pitched sound band generated based on a vibration of the passive vibration member 100.

According to another embodiment of the disclosure, at least one or more of a phase and an amplitude of the second driving signal applied to the 2-1^{st} active vibration member 231 may differ from at least one or more of a phase and an amplitude of the second driving signal applied to the 2-2^{nd} active vibration member 232. For example, the displacement point BP at which the first shape DSa and the second shape DSb of the first vibration portion 210 and the second vibration portion 230 intersect with each other may be changed, and thus, a vibration width of a vibration and a displacement force transferred to the passive vibration member 100 may vary, thereby implementing sounds of various-pitched sound bands. For example, as a position of the displacement point BP of the first vibration portion 210 and the second vibration portion 230 is changed, a vibration width of a vibration and a displacement force transferred to the passive vibration member 100 may vary, thereby implementing sounds of various-pitched sound bands.

As described above, an apparatus of an embodiment of the disclosure may supply driving signals having the same phase to the first vibration portion 210 and the second vibration portion 230 of the vibration apparatus 200, and thus, may increase a vibration width (or a displacement amount) of the passive vibration member 100, thereby enhancing a sound characteristic and a sound pressure level characteristic of the low-pitched sound band generated based on a vibration of the passive vibration member 100.

Also, an apparatus of an embodiment of the disclosure may supply driving signals having the opposite phase (or anti-phase) to the first vibration portion 210 and the second vibration portion 230 of the vibration apparatus 200, and thus, may decrease a vibration width (or a displacement amount) of the passive vibration member 100, thereby enhancing a sound characteristic and a sound pressure level characteristic of the middle-low-pitched sound band or the middle-high-pitched sound band generated based on a vibration of the passive vibration member 100.

Moreover, the apparatus of an embodiment of the disclosure may periodically or alternately supply the driving signals DS1 and DS2 having the same phase and the driving signals DS1 and DS2 having opposite phases (or anti-phases) to the first vibration portion 210 and the second vibration portion 230 of the vibration apparatus 200, and thus, may adjust (or vary) a vibration width (or a displacement amount) of the first vibration portion 210 and the second vibration portion 230 to adjust (or vary) a vibration width (or a displacement amount) of the passive vibration member 100, thereby generating (or outputting) sounds of various-pitched sound bands based on a vibration of the passive vibration member 100 and enhancing a sound characteristic and a sound pressure level characteristic of various-pitched sound bands.

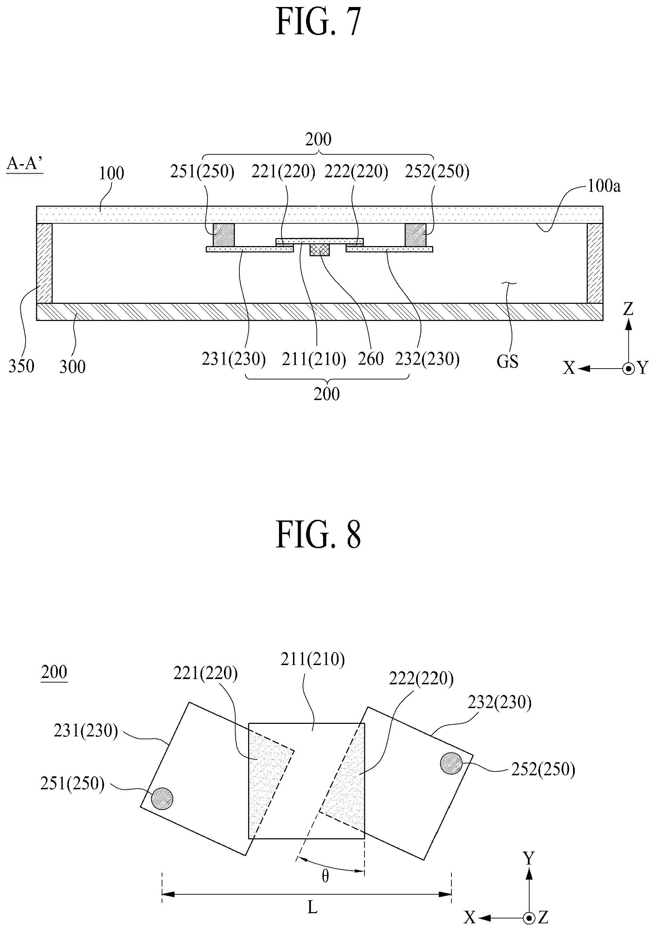

FIG. 7 is another cross-sectional view taken along line I-I' illustrated in FIG. 1. FIG. 7 illustrates an embodiment where a mass member is additionally provided in the apparatus or the vibration apparatus of an embodiment of the disclosure described above with reference to FIGs. 1 to 6B. Therefore, in descriptions of FIG. 7, the other elements except a mass member and relevant elements are referred to by like reference numerals, and their repetitive descriptions may be omitted.

With reference to FIG. 7, an apparatus or a vibration apparatus 200 of another embodiment of the disclosure may further include a mass member 260.

The mass member 260 may be disposed or attached at the first vibration portion 210. For example, the mass member 260 may be disposed at the first active vibration member 211 between the 2-1^{st} active vibration member 231 and the 2-2^{nd} active vibration member 232. For example, the mass member 260 may be disposed or attached at a rear center portion or a front center portion of the first active vibration device 211. For example, the mass member 260 may have a polygonal pillar shape or a circular pillar shape.

The mass member 260 may include an elastic material capable of acting as a mass (or mass body) on the first active vibration member 211. For example, the mass member 260 may include an elastic material having strength which is less than a bending strength of the active vibration member 211. For example, the mass member 260 may include the same elastic material as a connection portion 250.

The mass member 260 may act as a mass (or mass body) which increases a mass (or weight) of each of the active vibration member 211, the 2-1^{st} active vibration member 231, and the 2-2^{nd} active vibration member 232 to decrease a lowest resonance frequency (or lowest natural frequency) of the active vibration member 211. Accordingly, each of the active vibration member 211, the 2-1^{st} active vibration member 231, and the 2-2^{nd} active vibration member 232 may more decrease a lowest resonance frequency (or lowest natural frequency), and thus, may vibrate at a relatively lower frequency.

Alternatively, the mass member 260 may be disposed between each of the 2-1^{st} active vibration member 231 and the 2-2^{nd} active vibration member 232 and the first active vibration member 211. For example, the mass member 260 may be disposed between the first active vibration member 211 and the adhesive member 220. For example, the mass member 260 may be disposed between each of the 2-1^{st} active vibration member 231 and the 2-2^{nd} active vibration member 232 and the adhesive member 220. The mass member 260 may be embedded in each of first and second adhesive members 221 and 222. The first and second adhesive members 221 and 222 may be disposed to wholly surround the mass member 260. Even in this case, the mass member 260 may act as a mass (or mass body) which increases a mass (or weight) of each of the active vibration member 211, the 2-1^{st} active vibration member 231, and the 2-2^{nd} active vibration member 232 to decrease a lowest resonance frequency (or lowest natural frequency) of the active vibration member 211.

Alternatively, the mass member 260 may be disposed each of the 2-1^{st} active vibration member 231 and the 2-2^{nd} active vibration member 232. For example, the mass member 260 may be disposed or attached at the rear center portion of each of the 2-1^{st} active vibration member 231 and the 2-2^{nd} active vibration member 232 facing a supporting member 300. Even in this case, the mass member 260 may act as a mass (or mass body) which increases a mass (or weight) of each of the active vibration member 211, the 2-1^{st} active vibration member 231, and the 2-2^{nd} active vibration member 232 to decrease a lowest resonance frequency (or lowest natural frequency) of the active vibration member 211.

As described above, the apparatus or the vibration apparatus 200 of another embodiment of the disclosure may further include the mass member 260 capable of decreasing a lowest resonance frequency of each of the active vibration member 211, the 2-1^{st} active vibration member 231, and the 2-2^{nd} active vibration member 232, and thus, may more enhance a sound characteristic and a sound pressure level characteristic of a low-pitched sound band generated based on a vibration of the passive vibration member 100.

FIG. 8 illustrates a vibration apparatus of a second embodiment of the disclosure. FIG. 8 illustrates an embodiment implemented by modifying the second vibration portion in the apparatus described above with reference to FIGs. 2 and 3. Therefore, in descriptions of FIG. 8, the other elements except the second vibration portion and relevant elements are referred to by like reference numerals, and their repetitive descriptions may be omitted.

With reference to FIGs. 2 and 8, in the vibration apparatus 200 of a second embodiment of the disclosure, each of the 2-1^{st} and 2-2^{nd} active vibration members 231 and 232 of the second vibration portion 230 may be inclined or rotated from the first active vibration member 211 of the first vibration portion 210. The 2-1^{st} and 2-2^{nd} active vibration members 231 and 232 may be disposed to be sloped or inclined with respect to the first and second periphery portions of the first active vibration member 211 and may be arranged in parallel with the center portion of the first active vibration member 211 therebetween.

Each of the 2-1^{st} and 2-2^{nd} active vibration members 231 and 232 may be disposed to be sloped or inclined or rotated by a certain angle (θ) with respect to the second direction Y. Each of the 2-1^{st} and 2-2^{nd} active vibration members 231 and 232 may be disposed to be sloped or inclined by the certain angle (θ) with respect to first and second sides of the first active vibration member 211 parallel with the second direction Y. For example, a first side, corresponding to the first periphery portion, of each of the 2-1^{st} and 2-2^{nd} active vibration members 231 and 232 may be sloped or inclined by the certain angle (θ) with respect to the first and second sides of the first active vibration member 211.

According to an embodiment of the disclosure, an angle (θ) between the first side of the first active vibration member 211 and the first side of the 2-1^{st} active vibration member 231 may be an acute angle. In addition, an angle (θ) between the second side of the first active vibration member 211 and the first side of the 2-2^{nd} active vibration member 232 may be an acute angle. For example, each of an angle (θ) between the first side of the first active vibration member 211 and the first side of the 2-1^{st} active vibration member 231 and an angle (θ) between the second side of the first active vibration member 211 and the first side of the 2-2^{nd} active vibration member 232 may be 45 degrees or less, but embodiments of the disclosure are not limited thereto.

According to an embodiment of the disclosure, at least one or more of both corner portions of the first periphery portion of the first active vibration member 211 may overlap or be connected to the first periphery portion of the 2-1^{st} active vibration member 231. At least one or more of both corner portions of the second periphery portion of the first active vibration member 211 may overlap or be connected to the first periphery portion of the 2-2^{nd} active vibration member 232. Therefore, when the first active vibration member 211 is vibrating, the occurrence of a crack or breakage in a corner portion of the first active vibration member 211 may be prevented or minimized, and thus, the reliability of the first active vibration member 211 or the vibration apparatus 200 may be enhanced.

According to an embodiment of the disclosure, each of the 2-1^{st} active vibration member 231 and the 2-2^{nd} active vibration member 232 may include a first corner portion overlapping the first active vibration member 211 and a second corner portion opposite to the first corner portion. Therefore, a distance between the second corner portion of each of the 2-1^{st} active vibration member 231 and the 2-2^{nd} active vibration member 232 and the center portion of the first active vibration member 211 may increase compared to FIG. 3, and thus, a length of the vibration apparatus 200 may increase, whereby a vibration width (or a displacement width) of the vibration apparatus 200 may increase.

In the vibration apparatus 200 of the second embodiment of the disclosure, the first connection member 251 of the connection portion 250 may be connected to or coupled to a region between the second corner portion of the 2-1^{st} active vibration member 231 and the rear surface 100a of the passive vibration member 100. The second connection member 252 of the connection portion 250 may be connected to or coupled to a region between the second corner portion of the 2-2^{nd} active vibration member 232 and the rear surface 100a of the passive vibration member 100. Therefore, a distance L between the first connection member 251 and the second connection member 252 may increase compared to FIG. 3, and thus, a length of the vibration apparatus 200 may increase, whereby a vibration width (or a displacement width) of the vibration apparatus 200 may increase.

As described above, in the vibration apparatus 200 of the second embodiment of the disclosure, each of the 2-1^{st} and 2-2^{nd} active vibration members 231 and 232 may be disposed to be sloped or inclined from the first active vibration member 211, and thus, a vibration width (or a displacement width) of the vibration apparatus 200 may increase, thereby enhancing a sound characteristic and/or a sound pressure level characteristic of the low-pitched sound band generated based on a vibration of the passive vibration member 100.

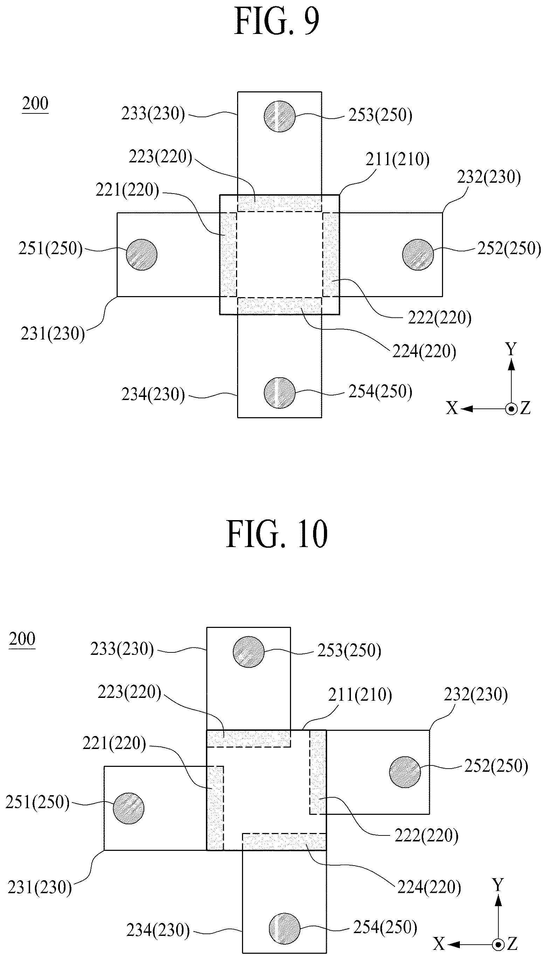

FIG. 9 illustrates a vibration apparatus of a third embodiment of the disclosure. FIG. 9 illustrates an embodiment implemented by modifying the second vibration portion in the apparatus described above with reference to FIGs. 2 and 3 or 7. Therefore, in descriptions of FIG. 9, the other elements except the second vibration portion and relevant elements are referred to by like reference numerals, and their repetitive descriptions may be omitted.

With reference to FIGs. 2, 7, and 9, in the vibration apparatus 200 of the third embodiment of the disclosure, a second vibration portion 230 may include four active vibration members 231, 232, 233, and 234. For example, the second vibration portion 230 may include 2-1^{st} to 2-4^{th} active vibration members 231, 232, 233, and 234. For example, the 2-1^{st} active vibration member 231 and the 2-2^{nd} active vibration member 232 may be a pair of second active vibration members, and the 2-3^{rd} active vibration member 233 and the 2-4^{th} active vibration member 234 may be a pair of third active vibration members. In the disclosure, the 2-1^{st} to 2-4^{th} active vibration members 231, 232, 233, and 234 may be second to fifth active vibration members, but embodiments of the disclosure are not limited to digits "2-1^{st}" to "2-4^{th}".

Each of the 2-1^{st} to 2-4^{th} active vibration members 231, 232, 233, and 234 may have a shape which differs from that of the first active vibration member 211. As an embodiment of the disclosure, each of the 2-1^{st} to 2-4^{th} active vibration members 231, 232, 233, and 234 may have a square shape having a small size which is the same as that of the first active vibration member 211. As another embodiment of the disclosure, each of the 2-1^{st} to 2-4^{th} active vibration members 231, 232, 233, and 234 may have a rectangular shape having a smaller width which is than that of the first active vibration member 211 and a size which is greater than or equal to that of the first active vibration member 211.

The 2-1^{st} active vibration member 231 may be connected or coupled to the first periphery portion of the first active vibration member 211. The 2-1^{st} active vibration member 231 may be substantially the same as the 2-1^{st} active vibration member 231 described above with reference to FIGs. 2 and 3, and thus, the repetitive description thereof may be omitted.

The 2-2^{nd} active vibration member 232 may be connected or coupled to the second periphery portion of the first active vibration member 211. The 2-2^{nd} active vibration member 232 may be substantially the same as the 2-2^{nd} active vibration member 232 described above with reference to FIGs. 2 and 3, and thus, the repetitive description thereof may be omitted.

The 2-3^{rd} active vibration member 233 may be connected or coupled to a third periphery portion of the first active vibration member 211. For example, in the first active vibration member 211, the third periphery portion may be disposed (or located) between the first periphery portion and the second periphery portion, or the third periphery portion of the first active vibration member 211 may be disposed (or located) between the 2-1^{st} active vibration member 231 and the 2-2^{nd} active vibration member 232. For example, the third periphery portion of the first active vibration member 211 may include a side, which is parallel with a first direction X, of sides of the first active vibration member 211. For example, a first periphery portion of the 2-3^{rd} active vibration member 233 may be connected or coupled to the third periphery portion of the first active vibration member 211 by a third adhesive member 223 of an adhesive member 220. Except for that the 2-3^{rd} active vibration member 233 is connected to the third periphery portion of the first active vibration member 211 by the third adhesive member 223, the 2-3^{rd} active vibration member 233 may be substantially the same as the 2-1^{st} active vibration member 231 described above with reference to FIGs. 2 and 3, and thus, the repetitive description thereof may be omitted.

The 2-4^{th} active vibration member 234 may be connected or coupled to a fourth periphery portion of the first active vibration member 211. For example, in the first active vibration member 211, the fourth periphery portion may be parallel with the third periphery portion. For example, a first periphery portion of the 2-4^{th} active vibration member 234 may be connected or coupled to the fourth periphery portion of the first active vibration member 211 by a fourth adhesive member 224 of the adhesive member 220. Except for that the 2-4^{th} active vibration member 234 is connected to the fourth periphery portion of the first active vibration member 211 by the fourth adhesive member 224, the 2-4^{th} active vibration member 234 may be substantially the same as the 2-1^{st} active vibration member 231 described above with reference to FIGs. 2 and 3, and thus, the repetitive description thereof may be omitted.

The 2-3^{rd} active vibration member 233 and the 2-4^{th} active vibration member 234 may be arranged in parallel with the center portion of the first active vibration member 211 therebetween. Each of the 2-3^{rd} active vibration member 233 and the 2-4^{th} active vibration member 234 may include a vibration device. The vibration device of each of the 2-3^{rd} active vibration member 233 and the 2-4^{th} active vibration member 234 may be substantially the same as the vibration device of the 2-1^{st} active vibration member 231 described above with reference to FIGs. 2 to 5B, and thus, their repetitive descriptions may be omitted.

According to an embodiment of the disclosure, each of the 2-1^{st} to 2-4^{th} active vibration members 231, 232, 233, and 234 may vibrate (or displace) based on the second driving signal having a phase which is the same as or opposite to that of the first driving signal applied to the first active vibration member 211.

According to another embodiment of the disclosure, 2-1^{st} to 2-4^{th} driving signals respectively applied to the 2-1^{st} to 2-4^{th} active vibration members 231, 232, 233, and 234 may be the same or differ. For example, at least one or more of the 2-1^{st} to 2-4^{th} driving signals may be differ. For example, at least one or more of the 2-1^{st} to 2-4^{th} driving signals may include different phases. For example, at least one or more of the 2-1^{st} to 2-4^{th} driving signals may include different amplitudes. For example, at least one or more of the 2-1^{st} to 2-4^{th} driving signals may include different phases and different amplitudes. Therefore, one or more of the 2-1^{st} to 2-4^{th} active vibration members 231, 232, 233, and 234 may vibrate based on different vibration widths (or displacements), and thus, a vibration width of a vibration and a displacement force transferred to the passive vibration member 100 may be changed based on a vibration of the vibration apparatus 200, thereby implementing sounds of various-pitched sound bands.

Each of the third adhesive member 223 and the fourth adhesive member 224 may be substantially the same as the first adhesive member 221 described above with reference to FIGs. 2 and 3, and thus, their repetitive descriptions may be omitted.

In the vibration apparatus 200 of the third embodiment of the disclosure, the connection portion 250 may include first to fourth connection members 251, 252, 253, and 254.

The first connection member 251 may be connected or coupled between a second periphery portion of the 2-1^{st} active vibration member 231 and the rear surface 100a of the passive vibration member 100. The first connection member 251 may be substantially the same as the first connection member 251 described above with reference to FIGs. 2 and 3, and thus, the repetitive description thereof may be omitted.

The second connection member 252 may be connected or coupled between a second periphery portion of the 2-2^{nd} active vibration member 232 and the rear surface 100a of the passive vibration member 100. The second connection member 252 may be substantially the same as the second connection member 252 described above with reference to FIGs. 2 and 3, and thus, the repetitive description thereof may be omitted.

The third connection member 253 may be connected or coupled between a third periphery portion of the 2-3^{rd} active vibration member 233 and the rear surface 100a of the passive vibration member 100. The third connection member 253 may be substantially the same as the first connection member 251 described above with reference to FIGs. 2 and 3, and thus, the repetitive description thereof may be omitted.

The fourth connection member 254 may be connected or coupled between a fourth periphery portion of the 2-4^{th} active vibration member 234 and the rear surface 100a of the passive vibration member 100. The fourth connection member 254 may be substantially the same as the first connection member 251 described above with reference to FIGs. 2 and 3, and thus, the repetitive description thereof may be omitted.

As described above, because a vibration apparatus 200 of a third embodiment of the disclosure include the 2-1^{st} to 2-4^{th} active vibration members 231, 232, 233, and 234 connected between the first active vibration member 211 and the passive vibration member 100, the vibration apparatus 200 may more increase a vibration width (or a displacement width) of the passive vibration member 100 to more enhance a sound characteristic and a sound pressure level characteristic of the low-pitched sound band and may change a vibration width of a vibration and a displacement force transferred to the passive vibration member 100 to implement sounds of various-pitched sound bands, thereby implementing a sound characteristic and a sound pressure level characteristic of various-pitched sound bands.

FIG. 10 illustrates a vibration apparatus of a fourth embodiment of the disclosure. FIG. 10 illustrates an embodiment implemented by modifying an arrangement structure of the 2-1^{st} to 2-4^{th} active vibration members in the vibration apparatus illustrated in FIG. 9. Therefore, in descriptions of FIG. 10, the other elements except the 2-1^{st} to 2-4^{th} active vibration members and relevant elements are referred to by like reference numerals, and their repetitive descriptions may be omitted.

With reference to FIGs. 2, 7, and 10, in the vibration apparatus 200 of the fourth embodiment of the disclosure, each of the 2-1^{st} to 2-4^{th} active vibration members 231, 232, 233, and 234 may be disposed at a corner portion of a periphery portion of the first active vibration member 211.

Each of the 2-1^{st} to 2-4^{th} active vibration members 231, 232, 233, and 234 may be disposed close to a corner portion of the first active vibration member 211 with respect to a periphery portion of the first active vibration member 211.

The 2-1^{st} active vibration member 231 may be connected or coupled to a first periphery portion of the first active vibration member 211 to overlap a first corner portion of the first active vibration member 211. The 2-2^{nd} active vibration member 232 may be connected or coupled to a second periphery portion of the first active vibration member 211 to overlap a second corner portion, disposed in a diagonal direction with respect to the first corner portion, of the first active vibration member 211. The 2-3^{rd} active vibration member 233 may be connected or coupled to a third periphery portion of the first active vibration member 211 to overlap a third corner portion of the first active vibration member 211. The 2-4^{th} active vibration member 234 may be connected or coupled to a fourth periphery portion of the first active vibration member 211 to overlap a fourth corner portion, disposed in a diagonal direction with respect to the third corner portion, of the first active vibration member 211.

According to an embodiment of the disclosure, the 2-1^{st} to 2-4^{th} active vibration members 231 to 234 may respectively overlap the first to fourth corner portions of the first active vibration member 211, and thus, when the first active vibration member 211 is vibrating, the occurrence of a crack or breakage in the corner portion of the first active vibration member 211 may be prevented or minimized, and thus, the reliability of the first active vibration member 211 or the vibration apparatus 200 may be enhanced.

As described above, the vibration apparatus 200 of the fourth embodiment of the disclosure may have the same effect as that of the vibration apparatus 200 of the third embodiment of the disclosure and each of the 2-1^{st} to 2-4^{th} active vibration members 231 to 234 may respectively overlap the corner portion of the first active vibration member 211, and thus, the occurrence of a crack or breakage in the corner portion of the first active vibration member 211 may be prevented or minimized, thereby enhancing reliability.

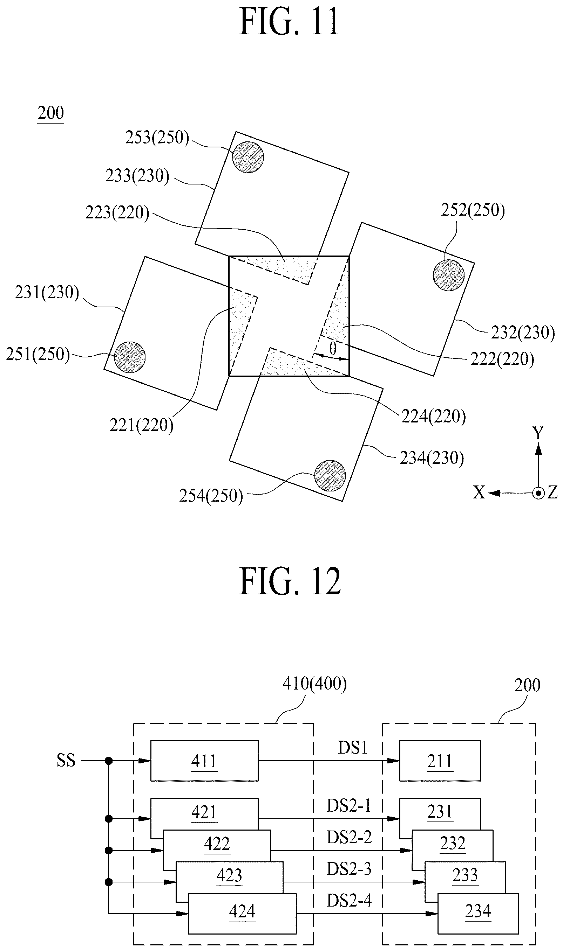

FIG. 11 illustrates a vibration apparatus of a fifth embodiment of the disclosure. FIG. 11 illustrates an embodiment where 2-3^{rd} and 2-4^{th} active vibration members are additionally provided in the second vibration portion of the vibration apparatus described above with reference to FIG. 8. Therefore, in descriptions of FIG. 11, the other elements except the 2-3^{rd} and 2-4^{th} active vibration members and relevant elements are referred to by like reference numerals, and their repetitive descriptions may be omitted.

With reference to FIGs. 2, 7, and 11, in the vibration apparatus 200 of the fifth embodiment of the disclosure, the second vibration portion 230 may further include 2-3^{rd} and 2-4^{th} active vibration members 233 and 234.

Each of the 2-3^{rd} and 2-4^{th} active vibration members 233 and 234 may be disposed to be sloped or inclined with respect to third and fourth periphery portions of the first active vibration member 211 and may be arranged in parallel with the center portion of the first active vibration member 211 therebetween. Each of the 2-3^{rd} and 2-4^{th} active vibration members 233 and 234 may be configured to have the same shape and the same size as each of the 2-1^{st} and 2-2^{nd} active vibration members 231 and 232.

Each of the 2-3^{rd} and 2-4^{th} active vibration members 233 and 234 may be disposed to be sloped or inclined by a certain angle (θ) with respect to a first direction X. For example, each of the 2-3^{rd} and 2-4^{th} active vibration members 233 and 234 may be disposed to be sloped or inclined by the certain angle (θ) with respect to third and fourth sides of the first active vibration member 211 parallel with the first direction X. For example, a first side, corresponding to the first periphery portion, of each of the 2-3^{rd} and 2-4^{th} active vibration members 233 and 234 may be sloped or inclined by the certain angle (θ) with respect to the third and fourth sides of the first active vibration member 211.

According to an embodiment of the disclosure, an angle (θ) between each of sides of the first active vibration member 211 and the first side of the 2-1^{st} to 2-4^{th} active vibration member 231, 232, 233, and 234 may be an acute angle. For example, an angle (θ) between each of sides of the first active vibration member 211 and the first side of the 2-1^{st} to 2-4^{th} active vibration member 231, 232, 233, and 234 may be 45 degrees or less.

According to an embodiment of the disclosure, each of the 2-1^{st} to 2-4^{th} active vibration member 231, 232, 233, and 234 may include a first corner portion overlapping the first active vibration member 211 and a second corner portion opposite to the first corner portion. Therefore, a distance between the second corner portion of each of the 2-1^{st} to 2-4^{th} active vibration member 231, 232, 233, and 234 and the center portion of the first active vibration member 211 may increase compared to FIG. 3, and thus, a length of the vibration apparatus 200 may increase, whereby a vibration width (or a displacement width) of the vibration apparatus 200 may increase.

According to an embodiment of the disclosure, the 2-3^{rd} active vibration member 233 may be connected or coupled to the third periphery portion of the first active vibration member 211 by a third adhesive member 223 of an adhesive member 220. For example, a first periphery portion, including a first corner portion, of the 2-3^{rd} active vibration member 233 may be connected or coupled to the third periphery portion of the first active vibration member 211 by the third adhesive member 223. Except for that the 2-3^{rd} active vibration member 233 is connected to the third periphery portion of the first active vibration member 211 by the third adhesive member 233, the 2-3^{rd} active vibration member 233 may be substantially the same as the 2-1^{st} active vibration member 231 described above with reference to FIG. 8, and thus, the repetitive description thereof may be omitted.

The 2-4^{th} active vibration member 234 may be connected or coupled to the fourth periphery portion of the first active vibration member 211 by a fourth adhesive member 224 of the adhesive member 220. For example, a first periphery portion, including a first corner portion, of the 2-4^{th} active vibration member 234 may be connected or coupled to the fourth periphery portion of the first active vibration member 211 by the fourth adhesive member 224. Except for that the 2-4^{th} active vibration member 234 is connected to the fourth periphery portion of the first active vibration member 211 by the fourth adhesive member 234, the 2-4^{th} active vibration member 234 may be substantially the same as the 2-1^{st} active vibration member 231 described above with reference to FIG. 8, and thus, the repetitive description thereof may be omitted.

According to an embodiment of the disclosure, at least one or more of both corner portions of the third periphery portion of the first active vibration member 211 may overlap or be connected to the first periphery portion of the 2-3^{rd} active vibration member 233. At least one or more of both corner portions of the fourth periphery portion of the first active vibration member 211 may overlap or be connected to the first periphery portion of the 2-4^{th} active vibration member 234. Accordingly, each corner portions of the first active vibration member 211 may overlap or be connected to each of the 2-1^{st} to 2-4^{th} active vibration members 231, 232, 233, and 234. Therefore, when the first active vibration member 211 is vibrating, the occurrence of a crack or breakage in corner portions of the first active vibration member 211 may be prevented or minimized, and thus, the reliability of the first active vibration member 211 or the vibration apparatus 200 may be enhanced.

Each of the 2-3^{rd} active vibration member 233 and the 2-4^{th} active vibration member 234 may include a vibration device. The vibration device of each of the 2-3^{rd} active vibration member 233 and the 2-4^{th} active vibration member 234 may be substantially the same as the vibration device of the 2-1^{st} active vibration member 231 described above with reference to FIGs. 2 to 5B, and thus, their repetitive descriptions may be omitted.

According to an embodiment of the disclosure, each of the 2-1^{st} to 2-4^{th} active vibration members 231, 232, 233, and 234 may vibrate (or displace) based on the second driving signal having a phase which is the same as or opposite to that of the first driving signal applied to the first active vibration member 211.

According to another embodiment of the disclosure, as described above with reference to FIG. 9, 2-1^{st} to 2-4^{th} driving signals respectively applied to the 2-1^{st} to 2-4^{th} active vibration members 231, 232, 233, and 234 may be the same or differ.

In the vibration apparatus 200 of the fifth embodiment of the disclosure, the first connection member 251 of the connection portion 250 may be connected or coupled between a second corner portion of the 2-1^{st} active vibration member 231 and the rear surface 100a of the passive vibration member 100. The second connection member 252 of the connection portion 250 may be connected or coupled between a second corner portion of the 2-2^{nd} active vibration member 232 and the rear surface 100a of the passive vibration member 100. Therefore, a distance between the first connection member 251 and the second connection member 252 may increase compared to FIG. 3, and thus, a length of the vibration apparatus 200 may increase, whereby a vibration width (or a displacement width) of the vibration apparatus 200 may increase.

In the vibration apparatus 200 of the fifth embodiment of the disclosure, the connection portion 250 may further include third and fourth connection members 253 and 254.

The third connection member 253 may be connected or coupled between a second corner portion of the 2-3^{rd} active vibration member 233 and the rear surface 100a of the passive vibration member 100. The fourth connection member 253 may be connected or coupled between a second corner portion of the 2-4^{th} active vibration member 234 and the rear surface 100a of the passive vibration member 100. Therefore, a distance between the third connection member 253 and the fourth connection member 254 may increase compared to FIG. 3, and thus, a length of the vibration apparatus 200 may increase, whereby a vibration width (or a displacement width) of the vibration apparatus 200 may increase.

As described above, the vibration apparatus 200 of fifth embodiment of the disclosure may further include the 2-1^{st} to 2-4^{th} active vibration members 231, 232, 233, and 234, and thus, may have the same effect as that of the vibration apparatus 200 of fourth embodiment of the disclosure. In addition, in the vibration apparatus 200 of fifth embodiment of the disclosure, each of the 2-1^{st} to 2-4^{th} active vibration members 231, 232, 233, and 234 may be disposed to be sloped or inclined from the first active vibration member 211, and thus, a vibration width (or a displacement width) of the vibration apparatus 200 may increase, thereby enhancing a sound characteristic and/or a sound pressure level characteristic of the low-pitched sound band generated based on a vibration of the passive vibration member 100.

FIG. 12 is a block diagram illustrating a vibration driving circuit of a first embodiment of the disclosure.

With reference to FIGs. 2 and 12, the vibration driving circuit 400 of the first embodiment of the disclosure may generate a first driving signal DS1 and a plurality of second driving signals DS2-1 to DS2-4 for vibrating (or displacing) each of first and second vibration portion 210 and 230 based on one sound source signal SS input from a host device (or a host driving circuit) and may supply the generated driving signals DS1 and DS2-1 to DS2-4 to corresponding vibration portion 210 and 230.

The vibration driving circuit 400 of the first embodiment of the disclosure may include an amplification circuit part 410.

The amplification circuit part 410 may be configured to amplify one sound source signal SS input thereto and supply the amplified sound source signal SS to each of the first active vibration member 211 and the plurality of active vibration members 231, 232, 233, and 234. The amplification circuit part 410 may include a plurality of amplification circuits 411 and 421 to 424 respectively corresponding to the first active vibration member 211 and the plurality of active vibration members 231, 232, 233, and 234. For example, the amplification circuit part 410 may include a first amplification circuit 411 and a plurality of second amplification circuits 421 to 424. For example, the vibration driving circuit 400 to drive the embodiment of the disclosure illustrated in FIGs. 3 and 7 may include a first amplification circuit 411, a 2-1^{st} amplification circuit 421, and a 2-2^{nd} amplification circuit 422. For example, the vibration driving circuit 400 to drive the embodiment of the disclosure illustrated in FIGs. 9 to 11 may include a first amplification circuit 411 and 2-1^{st} to 2-4^{th} amplification circuit 421, 422, 423, and 424.

Each of the first amplification circuit 411 and the plurality of second amplification circuits 421 to 424 may simultaneously receive the same sound source signal and may amplify a sound source signal based on a predetermined gain value to generate the first driving signal DS1 and the plurality of second driving signals DS2-1 to DS2-4.

The first amplification circuit 411 may amplify a sound source signal to a first driving signal DS1 having a positive or a negative based on a predetermined gain value to generate a first driving signal DS1 and may supply the generated first driving signal DS1 to the first active vibration member 211. For example, the first driving signal D1 of the positive and the first driving signal D1 of the negative may have the same period and a first amplitude. A first amplitude of each of the first driving signal DS1 of the positive and the first driving signal DS1 of the negative may increase or decrease based on the sound source signal. The first driving signal DS1 of negative may be a signal having an anti-phase of the first driving signal DS1 of the positive.

The plurality of second amplification circuits 421 to 424 may amplify the sound source signal to be equal to or different from the first driving signal DS1 of the positive or the negative based on the predetermined gain value to generate a plurality of second driving signals DS2-1 to DS2-4 and may supply the generated plurality of second driving signals DS2-1 to DS2-4 to corresponding second active vibration members 231, 232, 234, and 234.

A gain value of each of the plurality of second amplification circuits 421, 422, 423, and 424 may be set to correspond to a-pitched sound band of a sound which is to be implemented in the apparatus of an embodiment of the disclosure.

According to an embodiment of the disclosure, the gain value of each of the plurality of second amplification circuits 421, 422, 423, and 424 may be set so that each of the plurality of second driving signals DS2-1 to DS2-4 has the same phase as that of the first driving signal DS1. Accordingly, the plurality of second amplification circuits 421, 422, 423, and 424 may amplify the sound signal to the plurality of second driving signals DS2-1 to DS2-4 having the same phase as that of the first driving signal DS1 to output the amplified sound signal. In this case, as described above, a sound characteristic and a sound pressure level characteristic of the low-pitched sound band generated based on a vibration of the passive vibration member 100 may be enhanced.

According to another embodiment of the disclosure, the gain value of each of the plurality of second amplification circuits 421, 422, 423, and 424 may be set so that each of the plurality of second driving signals DS2-1 to DS2-4 has an anti-phase as that of the first driving signal DS1. Accordingly, the plurality of second amplification circuits 421, 422, 423, and 424 may amplify the sound signal to the plurality of second driving signals DS2-1 to DS2-4 having the anti-phase as that of the first driving signal DS1 to output the amplified sound signal. In this case, as described above, a sound characteristic and a sound pressure level characteristic of the middle-low-pitched sound band and the middle-high-pitched sound band generated based on a vibration of the passive vibration member 100 may be enhanced.

According to an embodiment of the disclosure, the gain value of each of the plurality of second amplification circuits 421, 422, 423, and 424 may be set so that at least one or more of the plurality of second driving signals DS2-1 to DS2-4 have a phase and an amplitude which differ from at least one or more of a phase and an amplitude of the first driving signal DS1. Therefore, each of the plurality of second amplification circuits 421, 422, 423, and 424 may amplify the sound signal to the plurality of second driving signals DS2-1 to DS2-4 having a phase and an amplitude which differ from at least one or more of a phase and an amplitude of the first driving signal DS1 and may output the amplified sound signal. For example, the plurality of second driving signals DS2-1 to DS2-4 may be the same or differ. For example, at least one or more of a phase and an amplitude of each of the plurality of second driving signals DS2-1 to DS2-4 may be the same as or different from one or more of a phase and an amplitude of the first driving signal DS1. For example, each of the plurality of second driving signals DS2-1 to DS2-4 may have the same phase as that of the first driving signal DS1 and may have an amplitude which is greater or less than that of the first driving signal DS1. In this case, as described above, sounds of various-pitched sound bands based on a vibration of the passive vibration member 100 may be implemented and a sound characteristic and a sound pressure level characteristic of various-pitched sound band generated based on a vibration of the passive vibration member 100 may be enhanced.

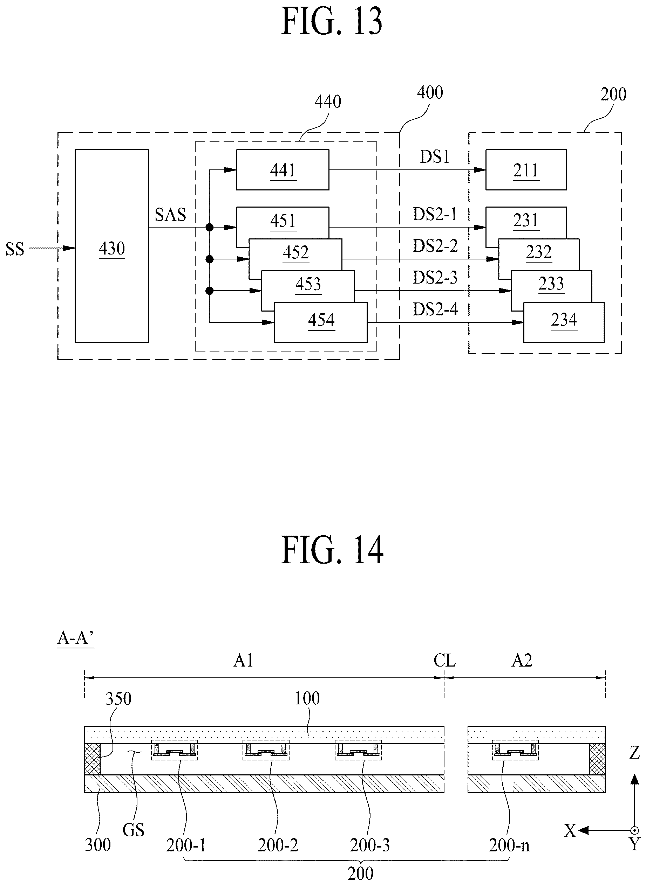

FIG. 13 is a block diagram illustrating a vibration driving circuit of a second embodiment of the disclosure.

With reference to FIGs. 2 and 13, the vibration driving circuit 400 of the second embodiment of the disclosure may generate a first driving signal DS1 and a plurality of second driving signals DS2-1 to DS2-4 for vibrating (or displacing) each of first and second vibration portion 210 and 230 based on one sound source signal SS input from a host device (or a host driving circuit) and may supply the generated driving signals DS1 and DS2-1 to DS2-4 to corresponding vibration portion 210 and 230.

The vibration driving circuit 400 of the second embodiment of the disclosure may include an amplification circuit 430 and a signal conversion part 440.

The amplification circuit 430 may simultaneously receive the same sound source signal and may amplify the sound source signal based on a predetermined gain value to generate a sound source amplification signal SAS. For example, the amplification circuit 430 may include a preamplifier and a main amplifier. A sound source signal (or a sound signal) SS input to the vibration driving circuit 400 may be primarily amplified by the preamplifier, and a signal primarily amplified by the preamplifier may be additionally amplified by the main amplifier and may be output as the sound source amplification signal SAS.

The signal conversion part 440 may convert the sound source amplification signal SAS supplied from the amplification circuit 430 into a driving signal DS1 and DS2-1 to DS2-4 and may supply the driving signals DS1 and DS2-1 to DS2-4 to corresponding active vibration members 211, 231, 232, 233, and 234. For example, the signal conversion part 440 may convert the sound source amplification signal SAS, supplied from the amplification circuit 430, into a driving signal DS based on a predetermined signal conversion coefficient (or a gain value) and may supply the driving signals DS1 and DS2-1 to DS2-4 to corresponding active vibration members 211, 231, 232, 233, and 234.

The signal conversion part 440 of an embodiment may include a plurality of signal conversion circuits 441 and 451 to 454 respectively corresponding to the first active vibration member 211 and the plurality of second active vibration members 231, 232, 233, and 234. For example, the signal conversion part 440 may include a first signal conversion circuit 441 and a plurality of second signal conversion circuits 451 to 454. For example, the vibration driving circuit 400 to drive the embodiment of the disclosure illustrated in FIGs. 3 and 7 may include a first signal conversion circuit 441, a 2-1^{st} signal conversion circuit 451, and a 2-2^{nd} signal conversion circuit 452. For example, the vibration driving circuit 400 to drive the embodiment of the disclosure illustrated in FIGs. 9 and 11 may include a first signal conversion circuit 441 and 2-1^{st} to 2-4^{th} signal conversion circuits 451 to 454.

The first signal conversion circuit 441 may convert the sound source amplification signal SAS, supplied from the amplification circuit 430, into the first driving signal DS1 of the positive or the negative based on the predetermined signal conversion coefficient (or gain value) and may supply the generated the first driving signal DS1 to the first active vibration member 211. For example, the first signal conversion circuit 441 may convert the sound source amplification signal SAS into the first driving signal DS1 of the positive or the negative having a first amplitude based on the predetermined signal conversion coefficient (or gain value). For example, the first driving signal D1 of the positive and the first driving signal D1 of the negative may have the same period and a first amplitude. A first amplitude of each of the first driving signal DS1 of the positive and the first driving signal DS1 of the negative may increase or decrease based on the sound source signal. The first driving signal DS1 of negative may be a signal having an anti-phase of the first driving signal DS1 of the positive.

The plurality of second signal conversion circuits 451 to 454 may amplify the sound source signal to be equal to or different from the first driving signal DS1 of the positive or the negative based on the predetermined signal conversion coefficient (or gain value) to generate a plurality of second driving signals DS2-1 to DS2-4 and may supply the generated plurality of second driving signals DS2-1 to DS2-4 to corresponding second active vibration members 231, 232, 233, and 234.

A signal conversion coefficient (or gain value) of each of the plurality of second signal conversion circuits 451 to 454 may be set to correspond to a-pitched sound band of a sound which is to be implemented in the apparatus of an embodiment of the disclosure.

According to an embodiment of the disclosure, the signal conversion coefficient (or gain value) of each of the plurality of second signal conversion circuits 451 to 454 may be set so that each of the plurality of second driving signals DS2-1 to DS2-4 has the same phase as that of the first driving signal DS1. Accordingly, the plurality of second signal conversion circuits 451 to 454 may amplify the sound signal to the plurality of second driving signals DS2-1 to DS2-4 having the same phase as that of the first driving signal DS1 to output the amplified sound signal. In this case, as described above, a sound characteristic and a sound pressure level characteristic of the low-pitched sound band generated based on a vibration of the passive vibration member 100 may be enhanced.

According to another embodiment of the disclosure, the signal conversion coefficient (or gain value) of each of the plurality of second signal conversion circuits 451 to 454 may be set so that each of the plurality of second driving signals DS2-1 to DS2-4 has an anti-phase as that of the first driving signal DS1. Accordingly, the plurality of second signal conversion circuits 451 to 454 may amplify the sound signal to the plurality of second driving signals DS2-1 to DS2-4 having the anti-phase as that of the first driving signal DS1 to output the amplified sound signal. In this case, as described above, a sound characteristic and a sound pressure level characteristic of the middle-low-pitched sound band and the middle-high-pitched sound band generated based on a vibration of the passive vibration member 100 may be enhanced.

According to an embodiment of the disclosure, the signal conversion coefficient (or gain value) of each of the plurality of second signal conversion circuits 451 to 454 may be set so that at least one or more of the plurality of second driving signals DS2-1 to DS2-4 have a phase and an amplitude which differ from at least one or more of a phase and an amplitude of the first driving signal DS1. Therefore, each of the plurality of second signal conversion circuits 451 to 454 may amplify the sound signal to the plurality of second driving signals DS2-1 to DS2-4 having a phase and an amplitude which differ from at least one or more of a phase and an amplitude of the first driving signal DS1 and may output the amplified sound signal. For example, the plurality of second driving signals DS2-1 to DS2-4 may be the same or differ. For example, at least one or more of a phase and an amplitude of each of the plurality of second driving signals DS2-1 to DS2-4 may be the same as or different from one or more of a phase and an amplitude of the first driving signal DS1. For example, each of the plurality of second driving signals DS2-1 to DS2-4 may have the same phase as that of the first driving signal DS1 and may have an amplitude which is greater or less than that of the first driving signal DS1. In this case, as described above, sounds of various-pitched sound bands based on a vibration of the passive vibration member 100 may be implemented and a sound characteristic and a sound pressure level characteristic of various-pitched sound band generated based on a vibration of the passive vibration member 100 may be enhanced.

As described above, the vibration driving circuit 400 of the second embodiment of the disclosure may have the same effect as that of the vibration driving circuit 400 described above with reference to FIG. 12, and the number of used amplification circuits may be reduced compared to the vibration driving circuit 400 described above with reference to FIG. 12.

FIG. 14 is another cross-sectional view taken along line A-A' illustrated in FIG. 1. FIG. 14 illustrates an embodiment where a plurality of vibration apparatuses are configured in the apparatus described above with reference to FIGs. 1 to 13. Therefore, in the following description, the other elements except a plurality of vibration apparatuses and relevant elements are referred to by like reference numerals, and their repetitive descriptions may be omitted.

With reference to FIG. 14, an apparatus of another embodiment of the disclosure may include a plurality of vibration apparatuses 200-1 to 200-n which are connected with a passive vibration member 100.

Each of the plurality of vibration apparatuses 200-1 to 200-n may be configured as one of the vibration apparatus of embodiments of the disclosure described above with reference to FIGs. 1 to 13. For example, each of the plurality of vibration apparatuses 200-1 to 200-n may be configured as the same vibration apparatus or a different vibration apparatus of the vibration apparatuses 200 described above with reference to FIGs. 1 to 13. Accordingly, a repetitive description of each of the plurality of vibration apparatuses 200-1 to 200-n may be omitted.

According to another embodiment of the disclosure, the plurality of vibration apparatuses 200-1 to 200-n may be divided (or classified) into a first group and a second group. Each of the first group and the second group may include one or more of the plurality of vibration apparatuses 200-1 to 200-n. For example, one or more of the plurality of vibration apparatuses 200-1 to 200-n may be included in the first group, and one or more other vibration apparatuses except the one or more vibration apparatuses included in the first group among the plurality of vibration apparatuses 200-1 to 200-n may be included in the second group. For example, the first group may be a first vibration group or a first driving group, and the second group may be a second vibration group or a second driving group.

The number of vibration apparatuses 200-1 to 200-n in the first group may be equal to or different from the number of vibration apparatuses 200-1 to 200-n in the second group.

According to another embodiment of the disclosure, the plurality of vibration apparatuses 200-1 to 200-n may be divided (or classified) into the first group and the second group based on an arrangement position. For example, with respect to an arrangement position disposed along a first direction X and/or a second direction Y, odd-numbered vibration apparatuses 200-1, 200-3, ... of the plurality of vibration apparatuses 200-1 to 200-n may be included in the first group, and even-numbered vibration apparatuses 200-2, 200-4, ..., and 200-n of the plurality of vibration apparatuses 200-1 to 200-n may be included in the second group.

According to another embodiment of the disclosure, with respect to a center line CL, the passive vibration member 100 may include a first region A1 and a second region A2. For example, the first region A1 may be a left region of the passive vibration member 100, and the second region A2 may be a right region of the passive vibration member 100. Accordingly, vibration apparatuses 200-1, 200-2, 200-3, ... disposed at the first region A1 of the passive vibration member 100 among the plurality of vibration apparatuses 200-1 to 200-n may be included in the first group, and vibration apparatuses ..., and 200-n disposed at the second region A2 of the passive vibration member 100 among the plurality of vibration apparatuses 200-1 to 200-n may be included in the second group.

According to an embodiment of the disclosure, a driving signal applied to one or more vibration apparatuses 200-1 to 200-n of a first group may be the same as a driving signal applied to one or more vibration apparatuses 200-1 to 200-n of a second group. For example, each of a plurality of second driving signals and a first driving signal applied to the one or more vibration apparatuses 200-1 to 200-n of the first group may have a phase (or the same phase and the same amplitude) which is the same as each of a plurality of second driving signals and a first driving signal applied to the one or more vibration apparatuses 200-1 to 200-n of the second group. Accordingly, as described above, a sound characteristic and a sound pressure level characteristic of the low-pitched sound band generated based on a vibration of the passive vibration member 100 may be more enhanced.

According to an embodiment of the disclosure, each of a plurality of second driving signals applied to the one or more vibration apparatuses 200-1 to 200-n of each of the first group and the second group may have an opposite phase (or an anti-phase and the same amplitude) to that of a first driving signal applied to the one or more vibration apparatuses 200-1 to 200-n of each of the first group and the second group. Accordingly, as described above, a sound characteristic and a sound pressure level characteristic of the middle-low-pitched sound band and the middle-high-pitched sound band generated based on a vibration of the passive vibration member 100 may be more enhanced.

According to another embodiment of the disclosure, a driving signal applied to one or more vibration apparatuses of the first group may differ from a driving signal applied to one or more vibration apparatuses of the second group. For example, at least one or more of a phase and an amplitude of each of the first driving signal and/or the plurality of second driving signals which are applied to one or more vibration apparatuses of the second group may differ from at least one or more of a phase and an amplitude of each of the first driving signal and/or the plurality of second driving signals which are applied to one or more vibration apparatuses of the first group. In this case, as described above, sounds of various-pitched sound bands based on a vibration of the passive vibration member 100 may be implemented and a sound characteristic and a sound pressure level characteristic of various-pitched sound band generated based on a vibration of the passive vibration member 100 may be enhanced.

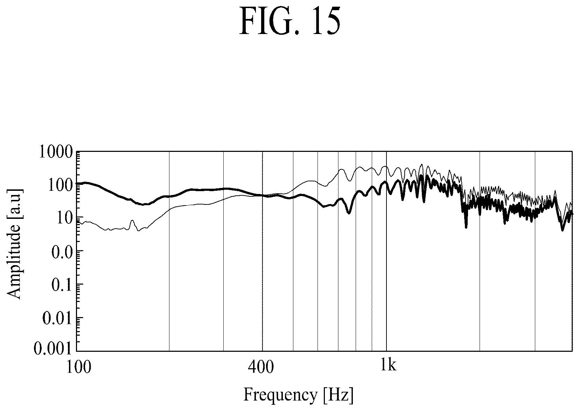

FIG. 15 is a graph illustrating a sound output characteristic of an apparatus of a first embodiment of the disclosure. In FIG. 15, the abscissa axis represents a frequency (Hz), and the ordinate axis represents an amplitude. The amplitude is a digit expressed as a relative value with respect to a maximum amplitude. Also, FIG. 15 shows a log-log graph. In FIG. 15, a thick solid line represents a sound output characteristic when a second driving signal applied to each of a plurality of second active vibration members has the same phase as that of a first driving signal applied to a first active vibration member as described above with reference to FIG. 6A, and a solid line represents a sound output characteristic when the second driving signal applied to each of the plurality of second active vibration members has an opposite phase to that of the first driving signal applied to the first active vibration member as described above with reference to FIG. 6B.

As seen in FIG. 15, comparing with the solid line, in the thick solid line, it may be seen that a sound pressure level increases in 400 Hz or less. Therefore, when the second driving signal applied to each of the plurality of second active vibration members has the same phase as that of the first driving signal applied to the first active vibration member, it may be seen that a sound characteristic and a sound pressure level are enhanced in 400 Hz or less.

As seen in FIG. 15, comparing with the solid line, in the thick solid line, it may be seen that a sound pressure level increases in 400 Hz or more. Therefore, when the second driving signal applied to each of the plurality of second active vibration members has an opposite phase to that of the first driving signal applied to the first active vibration member, it may be seen that a sound characteristic and a sound pressure level are enhanced in 400 Hz or more.

A vibration apparatus of an embodiment of the disclosure may be applied to a vibration apparatus disposed at an apparatus. The apparatus of an embodiment of the disclosure may be applied to mobile apparatuses, video phones, smart watches, watch phones, wearable apparatuses, foldable apparatuses, rollable apparatuses, bendable apparatuses, flexible apparatuses, curved apparatuses, sliding apparatuses, variable apparatuses, electronic organizers, electronic book, portable multimedia players (PMPs), personal digital assistants (PDAs), MP3 players, mobile medical devices, desktop personal computers (PCs), laptop PCs, netbook computers, workstations, navigation apparatuses, automotive navigation apparatuses, automotive display apparatuses, automotive apparatuses, theater apparatuses, theater display apparatuses, TVs, wall paper display apparatuses, signage apparatuses, game apparatuses, notebook computers, monitors, cameras, camcorders, home appliances, etc. Addition, the vibration apparatus of an embodiment of the disclosure may be applied to organic light-emitting lighting apparatuses or inorganic light-emitting lighting apparatuses. When the vibration apparatus of an embodiment of the disclosure is applied to lighting apparatuses, the lighting apparatus may act as lighting and a speaker. Addition, when the vibration apparatus of an embodiment of the disclosure is applied to a mobile device, etc, the vibration apparatus may act as one or more of a speaker, a receiver, and a haptic apparatus, but embodiments of the disclosure are not limited thereto.

It will be apparent to those skilled in the art that various modifications and variations can be made in the disclosure without departing from the scope of the disclosures. Thus, it is intended that the disclosure covers the modifications and variations of this disclosure provided they come within the scope of the appended claims.

## Claims

1. An apparatus, comprising:
a passive vibration member (100);
a vibration apparatus (200) connected to a rear surface (100a) of the passive vibration member (100); and
a supporting member (300) at the rear surface (100a) of the passive vibration member (100), wherein the vibration apparatus (100) comprises:
a first vibration portion (210);
a second vibration portion (230) connected to a periphery of the first vibration portion (210); and
a connection portion (250) connected to the second vibration portion (230) and the rear surface (100a) of the passive vibration member (100);
wherein:
the first vibration portion (210) comprises a first active vibration member (211) including first and second periphery portions being parallel to each other;
the second vibration portion (230) comprises a 2-1^{st} active vibration member (231) and a 2-2^{nd} active vibration member (232) respectively connected to the first and second periphery portions of the first active vibration member (211); and
the 2-1^{st} active vibration member (231) and the 2-2^{nd} active vibration member (232) are disposed in parallel with the first active vibration member (211) therebetween;
wherein:
each of the 2-1^{st} active vibration member (231) and the 2-2^{nd} active vibration member (232) comprises:
a first periphery portion overlapping the first active vibration member (211); and
a second periphery portion connected to the connection portion (250);
**characterized in that**:
the connection portion (250) comprises:
a first connection member (251) connected between the second periphery portion of the 2-1^{st} active vibration member (231) and the passive vibration member (100); and
a second connection member (252) connected between the second periphery portion of the 2-2^{nd} active vibration member (232) and the passive vibration member (100).

2. The apparatus of claim 1, wherein a corner portion of the first active vibration member (211) overlaps the first periphery portion of each of the 2-1^{st} active vibration member (231) and the 2-2^{nd} active vibration member (232) and/or each of the 2-1^{st} active vibration member (231) and the 2-2^{nd} active vibration member (232) is disposed to be inclined or rotated by a predetermined angle smaller than 90° in their planes with respect to each of the first and second periphery portions of the first active vibration member (211).

3. The apparatus of any one of the preceding claims, wherein each of the 2-1^{st} active vibration member (231) and the 2-2^{nd} active vibration member (232) comprises:
a first corner portion overlapping the first active vibration member (211); and
a second corner portion connected to the connection portion (250), and/or
wherein:
the first connection member (251) is connected between the second corner portion of the 2-1^{st} active vibration member (231) and the passive vibration member (100); and
the second connection member (252) is connected between the second corner portion of the 2-2^{nd} active vibration member (232) and the passive vibration member (100).

4. The apparatus of any one of the preceding claims, further comprising:
a 2-3^{rd} active vibration member (233) connected to a third periphery portion of the first active vibration member (211); and
a 2-4^{th} active vibration member (234) connected to a fourth periphery portion of the first active vibration member (211) in parallel with the 2-3^{rd} active vibration member (233) with a center portion of the first active vibration member (211) therebetween.

5. The apparatus of claim 4, wherein a width of any one or each of the 2-1^{st} to 2-4^{th} active vibration members (231, 232, 233, 234) is smaller than a width of the first active vibration member (211).

6. The apparatus of claim 4, wherein:
each of the 2-1^{st} to 2-4^{th} active vibration members (231, 232, 233, 234) comprises:
a first periphery portion overlapping the first active vibration member (211); and
a second periphery portion connected to the connection portion (250), and
the connection portion (250) comprises:
the first connection member (251) connected between the second periphery portion of the 2-1^{st} active vibration member (231) and the passive vibration member (100);
the second connection member (252) connected between the second periphery portion of the 2-2^{nd} active vibration member (232) and the passive vibration member (100);
a third connection member (253) connected between the second periphery portion of the 2-3^{rd} active vibration member (233) and the passive vibration member (100); and
a fourth connection member (254) connected between the second periphery portion of the 2-4^{th} active vibration member (234) and the passive vibration member (100).

7. The apparatus of claim 6, wherein a corner portion of the first active vibration member (211) overlaps the first periphery portion of each of the 2-1^{st} to 2-4^{th} active vibration members (231, 232, 233, 234); and/or
each of the 2-1^{st} active vibration member (231) and the 2-2^{nd} active vibration member (232) is disposed to be inclined with respect to each of the first and second periphery portions of the first active vibration member (211); and
each of the 2-3^{rd} active vibration member (233) and the 2-4^{th} active vibration member (234) is disposed to be inclined with respect to each of the third and fourth periphery portions of the first active vibration member (211); and/or
each of the 2-1^{st} to 2-4^{th} active vibration members (231, 232, 233, 234) comprises:
a first corner portion overlapping the first active vibration member (211); and
a second corner portion connected to the connection portion (250), the connection portion (250) comprises:
the first connection member (251) connected between the second corner portion of the 2-1^{st} active vibration member (231) and the passive vibration member (100);
the second connection member (252) connected between the second corner portion of the 2-2^{nd} active vibration member (232) and the passive vibration member (100);
a third connection member (253) connected between the second corner portion of the 2-3^{rd} active vibration member (233) and the passive vibration member (100); and
a fourth connection member (254) connected between the second corner portion of the 2-4^{th} active vibration member (234) and the passive vibration member (100).

8. The apparatus of any one of claims 1-3, wherein a plurality of vibration apparatuses (200) are connected to a rear surface of the passive vibration member (100).

9. The apparatus of claim 8, wherein each of the plurality of vibration apparatuses (200) further comprises a 2-3^{rd} active vibration member (233) and a 2-4^{th} active vibration member (234) connected to a periphery of the first active vibration member (211) in parallel with a center portion of the first active vibration member (211) therebetween; and
the connection portion (250) is connected to the rear surface of the passive vibration member (100) and each of the 2-3^{rd} to 2-4^{th} active vibration members (233, 234).

10. The apparatus of claim 9, wherein the plurality of vibration apparatuses (200) comprises a first group including one or more vibration apparatuses (200) and a second group including one or more vibration apparatuses (200); and the number of vibration apparatuses of the first group is equal to or different from the number of vibration apparatuses of the second group.

11. The apparatus of any one of claims 4-7, 9 and 10,
wherein a driving signal applied to the 2-1^{st} active vibration member (231) is the same as or different from a driving signal applied to the 2-2^{nd} active vibration member (232); and/or
a driving signal applied to each of the 2-1^{st} active vibration member (231) and the 2-2^{nd} active vibration member (232) has a phase which is the same as or opposite to a phase of a driving signal applied to the first active vibration member (211); and/or
a driving signal applied to each of the 2-1^{st} to 2-4^{th} active vibration members (231, 232, 233, 234) has a phase which is the same as or opposite to a phase of a driving signal applied to the first active vibration member (211); and/or
at least one or more of driving signals respectively applied to the 2-1^{st} to 2-4^{th} active vibration members (231, 232, 233, 234) have at least one or more of different phases and different amplitudes; and/or
at least one or more of a phase and an amplitude of a driving signal applied to each of the 2-1^{st} to 2-4^{th} active vibration members (231, 232, 233, 234) differ from at least one or more of a phase and an amplitude of a driving signal applied to the first active vibration member (211); and/or
a driving signal applied to the one or more vibration apparatuses (200) of the first group is the same as or different from a driving signal applied to the one or more vibration apparatuses (200) of the second group.

12. The apparatus of any one of the preceding claims, wherein the active vibration members (211, 231, 232) comprise a vibration device (201) including a piezoelectric layer and the piezoelectric layer (201a) comprises:
a plurality of piezoelectric portions including a piezoelectric material; and
a flexible portion between the plurality of piezoelectric portions.

13. The apparatus of any one of the preceding claims, wherein the vibration apparatus (200) further comprises a mass member (260) at the first active vibration member (211) and/or the connection member (250) comprises an elastic material and/or the passive vibration member (100) is a display panel including a display area having a plurality of pixels to implement an image, or comprises one or more materials of wood, rubber, plastic, flexible glass, fiber, cloth, paper, metal, carbon, a mirror, and leather.

## Patentansprüche

1. Vorrichtung, die Folgendes umfasst:
ein passives Schwingungselement (100);
eine Schwingungsvorrichtung (200), die mit einer Rückfläche (100a) des passiven Schwingungselements (100) verbunden ist; und
ein Trägerelement (300) an der Rückfläche (100a) des passiven Schwingungselements (100), wobei die Schwingungsvorrichtung (100) Folgendes umfasst:
einen ersten Schwingungsabschnitt (210);
einen zweiten Schwingungsabschnitt (230), der mit einem Rand des ersten Schwingungsabschnitts (210) verbunden ist; und
einen Verbindungsabschnitt (250), der mit dem zweiten Schwingungsabschnitt (230) und der Rückfläche (100a) des passiven Schwingungselements (100) verbunden ist;
wobei:
der erste Schwingungsabschnitt (210) ein erstes aktives Schwingungselement (211) umfasst, das einen ersten und einen zweiten Randabschnitt enthält, die zueinander parallel sind;
der zweite Schwingungsabschnitt (230) ein 2-1-tes aktives Schwingungselement (231) und ein 2-2-tes aktives Schwingungselement (232) umfasst, die mit dem ersten bzw. dem zweiten Randabschnitt des ersten aktiven Schwingungselements (211) verbunden sind; und
das 2-1-te aktive Schwingungselement (231) und das 2-2-te aktive Schwingungselement (232) parallel angeordnet sind, wobei sich das erste aktive Schwingungselement (211) dazwischen befindet;
wobei:
das 2-1-te aktive Schwingungselement (231) und das 2-2-te aktive Schwingungselement (232) jeweils Folgendes umfassen:
einen ersten Randabschnitt, der das erste aktive Schwingungselement (211) überlappt; und
einen zweiten Randabschnitt, der mit dem Verbindungsabschnitt (250) verbunden ist;
**dadurch gekennzeichnet, dass**:
der Verbindungsabschnitt (250) Folgendes umfasst:
ein erstes Verbindungselement (251), das zwischen dem zweiten Randabschnitt des 2-1-ten aktiven Schwingungselements (231) und dem passiven Schwingungselement (100) verbunden ist; und
ein zweites Verbindungselement (252), das zwischen dem zweiten Randabschnitt des 2-2-ten aktiven Schwingungselements (232) und dem passiven Schwingungselement (100) verbunden ist.

2. Vorrichtung nach Anspruch 1, wobei ein Eckenabschnitt des ersten aktiven Schwingungselements (211) den ersten Randabschnitt jeweils des 2-1-ten aktiven Schwingungselements (231) und des 2-2-ten aktiven Schwingungselements (232) überlappt und/oder das 2-1-te aktive Schwingungselement (231) und das 2-2-te aktive Schwingungselement (232) jeweils derart angeordnet sind, dass sie in ihren Ebenen in Bezug auf jeden des ersten und des zweiten Randabschnitts des ersten aktiven Schwingungselements (211) um einen vorgegebenen Winkel, der kleiner als 90° ist, geneigt oder gedreht sind..

3. Vorrichtung nach einem der vorhergehenden Ansprüche, wobei das 2-1-te aktive Schwingungselement (231) und das 2-2-te aktive Schwingungselement (232) jeweils Folgendes umfassen:
einen ersten Eckenabschnitt, der das erste aktive Schwingungselement (211) überlappt; und
einen zweiten Eckenabschnitt, der mit dem Verbindungsabschnitt (250) verbunden ist, und/oder
wobei:
das erste Verbindungselement (251) zwischen dem zweiten Eckenabschnitt des 2-1-ten aktiven Schwingungselements (231) und dem passiven Schwingungselement (100) verbunden ist; und
das zweite Verbindungselement (252) zwischen dem zweiten Eckenabschnitt des 2-2-ten aktiven Schwingungselements (232) und dem passiven Schwingungselement (100) verbunden ist.

4. Vorrichtung nach einem der vorhergehenden Ansprüche, die ferner Folgendes umfasst:
ein 2-3-tes aktives Schwingungselement (233), das mit einem dritten Randabschnitt des ersten aktiven Schwingungselements (211) verbunden ist; und
ein 2-4-tes aktives Schwingungselement (234), das mit einem vierten Randabschnitt des ersten aktiven Schwingungselements (211) parallel zum 2-3-ten aktiven Schwingungselement (233) verbunden ist, wobei sich ein Mittelabschnitt des ersten aktiven Schwingungselements (211) dazwischen befindet.

5. Vorrichtung nach Anspruch 4, wobei eine Breite von irgendeinem oder jedem des 2-1-ten bis 2-4-ten aktiven Schwingungselements (231, 232, 233, 234) kleiner als eine Breite des ersten aktiven Schwingungselements (211) ist.

6. Vorrichtung nach Anspruch 4, wobei:
das 2-1-te bis 2-4-te aktive Schwingungselement (231, 232, 233, 234) jeweils Folgendes umfassen:
einen ersten Randabschnitt, der das erste aktive Schwingungselement (211) überlappt; und
einen zweiten Randabschnitt, der mit dem Verbindungsabschnitt (250) verbunden ist, und
der Verbindungsabschnitt (250) Folgendes umfasst:
das erste Verbindungselement (251), das zwischen dem zweiten Randabschnitt des 2-1-ten aktiven Schwingungselements (231) und dem passiven Schwingungselement (100) verbunden ist;
das zweite Verbindungselement (252), das zwischen dem zweiten Randabschnitt des 2-2-ten aktiven Schwingungselements (232) und dem passiven Schwingungselement (100) verbunden ist;
ein drittes Verbindungselement (253), das zwischen dem zweiten Randabschnitt des 2-3-ten aktiven Schwingungselements (233) und dem passiven Schwingungselement (100) verbunden ist; und
ein viertes Verbindungselement (254), das zwischen dem zweiten Randabschnitt des 2-4-ten aktiven Schwingungselements (234) und dem passiven Schwingungselement (100) verbunden ist.

7. Vorrichtung nach Anspruch 6, wobei ein Eckenabschnitt des ersten aktiven Schwingungselements (211) den ersten Randabschnitt jeweils des 2-1-ten bis 2-4-ten aktiven Schwingungselements (231, 232, 233, 234) überlappt; und/oder
das 2-1-te aktive Schwingungselement (231) und das 2-2-te aktive Schwingungselement (232) jeweils derart angeordnet sind, dass sie in Bezug auf jeden des ersten und des zweiten Randabschnitts des ersten aktiven Schwingungselements (211) geneigt sind; und
das 2-3-te aktive Schwingungselement (233) und das 2-4-te aktive Schwingungselement (234) jeweils derart angeordnet sind, dass sie in Bezug auf jeden des dritten und vierten Randabschnitts des ersten aktiven Schwingungselements (211) geneigt sind; und/oder
das 2-1-te bis 2-4-te aktive Schwingungselement (231, 232, 233, 234) jeweils Folgendes umfassen:
einen ersten Eckenabschnitt, der das erste aktive Schwingungselement (211) überlappt; und
einen zweiten Eckenabschnitt, der mit dem Verbindungsabschnitt (250) verbunden ist, wobei der Verbindungsabschnitt (250) Folgendes umfasst:
das erste Verbindungselement (251), das zwischen dem zweiten Eckenabschnitt des 2-1-ten aktiven Schwingungselements (231) und dem passiven Schwingungselement (100) verbunden ist;
das zweite Verbindungselement (252), das zwischen dem zweiten Eckenabschnitt des 2-2-ten aktiven Schwingungselements (232) und dem passiven Schwingungselement (100) verbunden ist;
ein drittes Verbindungselement (253), das zwischen dem zweiten Eckenabschnitt des 2-3-ten aktiven Schwingungselements (233) und dem passiven Schwingungselement (100) verbunden ist; und
ein viertes Verbindungselement (254), das zwischen dem zweiten Eckenabschnitt des 2-4-ten aktiven Schwingungselements (234) und dem passiven Schwingungselement (100) verbunden ist.

8. Vorrichtung nach einem der Ansprüche 1-3, wobei mehrere Schwingungsvorrichtungen (200) mit einer Rückfläche des passiven Schwingungselements (100) verbunden sind.

9. Vorrichtung nach Anspruch 8, wobei die mehreren Schwingungsvorrichtungen (200) jeweils ferner ein 2-3-tes aktives Schwingungselement (233) und ein 2-4-tes aktives Schwingungselement (234) umfassen, die parallel mit einem Rand des ersten aktiven Schwingungselements (211) verbunden sind, wobei sich ein Mittelabschnitt des ersten aktiven Schwingungselements (211) dazwischen befindet; und
der Verbindungsabschnitt (250) mit der Rückfläche des passiven Schwingungselements (100) und jedem des 2-3-ten bis 2-4-ten aktiven Schwingungselements (233, 234) verbunden ist.

10. Vorrichtung nach Anspruch 9, wobei die mehreren Schwingungsvorrichtungen (200) eine erste Gruppe, die eine oder mehrere Schwingungsvorrichtungen (200) enthält, und eine zweite Gruppe, die eine oder mehrere Schwingungsvorrichtungen (200) enthält, umfassen und die Anzahl der Schwingungsvorrichtungen der ersten Gruppe gleich der Anzahl der Schwingungsvorrichtungen der zweiten Gruppe oder davon verschieden ist.

11. Vorrichtung nach einem der Ansprüche 4-7, 9 und 10,
wobei ein Ansteuersignal, das an das 2-1-te aktive Schwingungselement (231) angelegt wird, dasselbe wie ein Ansteuersignal, das an das 2-2-te aktive Schwingungselement (232) angelegt wird, oder davon verschieden ist; und/oder
ein Ansteuersignal, das jeweils an das 2-1-te aktive Schwingungselement (231) und an das 2-2-te aktive Schwingungselement (232) angelegt wird, eine Phase aufweist, die dieselbe wie eine Phase eines Ansteuersignals, das an das erste aktive Schwingungselement (211) angelegt wird, oder dazu entgegengesetzt ist; und/oder
ein Ansteuersignal, das jeweils an das 2-1-te bis 2-4-te aktive Schwingungselement (231, 232, 233, 234) angelegt wird, eine Phase aufweist, die dieselbe wie eine Phase eines Ansteuersignals, das an das erste aktive Schwingungselement (211) angelegt wird, oder dazu entgegengesetzt ist; und/oder
mindestens eines oder mehrere der Ansteuersignale, die jeweils an das 2-1-te bis 2-4-te aktive Schwingungselement (231, 232, 233, 234) angelegt werden, verschiedene Phasen und/oder verschiedene Amplituden aufweisen; und/oder
eine Phase und/oder eine Amplitude eines Ansteuersignals, das jeweils an das 2-1-te bis 2-4-te aktive Schwingungselement (231, 232, 233, 234) angelegt wird, sich von einer Phase und/oder einer Amplitude eines Ansteuersignals, das an das erste aktive Schwingungselement (211) angelegt wird, unterscheiden; und/oder
ein Ansteuersignal, das an die eine oder die mehreren Schwingungsvorrichtungen (200) der ersten Gruppe angelegt wird, dasselbe wie ein Ansteuersignal, das an die eine oder die mehreren Schwingungsvorrichtungen (200) der zweiten Gruppe angelegt wird, oder davon verschieden ist.

12. Vorrichtung nach einem der vorhergehenden Ansprüche, wobei die aktiven Schwingungselemente (211, 231, 232) eine Schwingungseinrichtung (201) umfassen, die eine piezoelektrische Schicht enthält, und die piezoelektrische Schicht (201a) Folgendes umfasst:
mehrere piezoelektrische Abschnitte, die ein piezoelektrisches Material enthalten;
und
einen flexiblen Abschnitt zwischen den mehreren piezoelektrischen Abschnitten.

13. Vorrichtung nach einem der vorhergehenden Ansprüche, wobei die Schwingungsvorrichtung (200) ferner ein Massenelement (260) am ersten aktiven Schwingungselement (211) umfasst und/oder das Verbindungselement (250) ein elastisches Material umfasst und/oder das passive Schwingungselement (100) eine Anzeigetafel ist, die einen Anzeigebereich mit mehreren Pixeln, um ein Bild zu implementieren, enthält, oder ein oder mehrere Materialien von Holz, Gummi, Kunststoff, flexiblem Glas, Faser, Stoff, Papier, Metall, Kohlenstoff, einem Spiegel und Leder umfasst.

## Revendications

1. Appareil, comportant :
un élément de vibration passif (100) ;
un appareil de vibration (200) relié à une surface arrière (100a) de l'élément de vibration passif (100) ; et
un élément de support (300) sur la surface arrière (100a) de l'élément de vibration passif (100), dans lequel l'appareil de vibration (200) comporte :
une première partie de vibration (210) ;
une seconde partie de vibration (230) reliée à une périphérie de la première partie de vibration (210) ; et
une partie de liaison (250) reliée à la seconde partie de vibration (230) et à la surface arrière (100a) de l'élément de vibration passif (100) ;
dans lequel :
la première partie de vibration (210) comporte un premier élément de vibration actif (211) incluant des première et deuxième parties périphériques étant parallèles l'une à l'autre ;
la seconde partie de vibration (230) comporte un 2-1^{er} élément de vibration actif (231) et un 2-2^{ème} élément de vibration actif (232) respectivement reliés aux première et deuxième parties périphériques du premier élément de vibration actif (211) ; et
le 2-1^{er} élément de vibration actif (231) et le 2-2^{ème} élément de vibration actif (232) sont disposés parallèlement au premier élément de vibration actif (211) entre ceux-ci ;
dans lequel :
chaque élément parmi le 2-1^{er} élément de vibration actif (231) et le 2-2^{ème} élément de vibration actif (232) comporte :
une première partie périphérique chevauchant le premier élément de vibration actif (211) ; et
une deuxième partie périphérique reliée à la partie de liaison (250) ;
**caractérisé en ce que** :
la partie de liaison (250) comporte :
un premier élément de liaison (251) relié entre la deuxième partie périphérique du 2-1^{er} élément de vibration actif (231) et l'élément de vibration passif (100) ; et
un deuxième élément de liaison (252) relié entre la deuxième partie périphérique du 2-2^{ème} élément de vibration actif (232) et l'élément de vibration passif (100).

2. Appareil selon la revendication 1, dans lequel une partie de coin du premier élément de vibration actif (211) chevauche la première partie périphérique de chaque élément parmi le 2-1^{er} élément de vibration actif (231) et le 2-2^{ème} élément de vibration actif (232) et/ou chaque élément parmi le 2-1^{er} élément de vibration actif (231) et le 2-2^{ème} élément de vibration actif (232) est disposé de manière à être incliné ou tourné d'un angle prédéterminé inférieur à 90° dans leurs plans par rapport à chacune des première et deuxième parties périphériques du premier élément de vibration actif (211).

3. Appareil selon l'une quelconque des revendications précédentes, dans lequel chaque élément parmi le 2-1^{er} élément de vibration actif (231) et le 2-2^{ème} élément de vibration actif (232) comporte :
une première partie de coin chevauchant le premier élément de vibration actif (211) ; et
une seconde partie de coin reliée à la partie de liaison (250), et/ou
dans lequel :
le premier élément de liaison (251) est relié entre la seconde partie de coin du 2-1^{er} élément de vibration actif (231) et l'élément de vibration passif (100) ; et
le deuxième élément de liaison (252) est relié entre la seconde partie de coin du 2-2^{ème} élément de vibration actif (232) et l'élément de vibration passif (100).

4. Appareil selon l'une quelconque des revendications précédentes, comportant en outre :
un 2-3^{ème} élément de vibration actif (233) relié à une troisième partie périphérique du premier élément de vibration actif (211) ; et
un 2-4^{ème} élément de vibration actif (234) relié à une quatrième partie périphérique du premier élément de vibration actif (211) parallèlement au 2-3^{ème} élément de vibration actif (233), avec une partie centrale du premier élément de vibration actif (211) entre ceux-ci.

5. Appareil selon la revendication 4, dans lequel une largeur d'un élément quelconque ou de chaque élément parmi les 2-1^{er} à 2-4^{ème} éléments de vibration actifs (231, 232, 233, 234) est inférieure à une largeur du premier élément de vibration actif (211).

6. Appareil selon la revendication 4, dans lequel :
chacun des 2-1^{er} à 2-4^{ème} éléments de vibration actifs (231, 232, 233, 234) comporte :
une première partie périphérique chevauchant le premier élément de vibration actif (211) ; et
une deuxième partie périphérique reliée à la partie de liaison (250), et
la partie de liaison (250) comporte :
le premier élément de liaison (251) relié entre la deuxième partie périphérique du 2-1^{er} élément de vibration actif (231) et l'élément de vibration passif (100) ;
le deuxième élément de liaison (252) relié entre la deuxième partie périphérique du 2-2^{ème} élément de vibration actif (232) et l'élément de vibration passif (100) ;
un troisième élément de liaison (253) relié entre la deuxième partie périphérique du 2-3^{ème} élément de vibration actif (233) et l'élément de vibration passif (100) ; et
un quatrième élément de liaison (254) relié entre la deuxième partie périphérique du 2-4^{ème} élément de vibration actif (234) et l'élément de vibration passif (100).

7. Appareil selon la revendication 6, dans lequel une partie de coin du premier élément de vibration actif (211) chevauche la première partie périphérique de chacun des 2-1^{er} à 2-4^{ème} éléments vibrants actifs (231, 232, 233, 234) ; et/ou
chaque élément parmi le 2-1^{er} élément de vibration actif (231) et le 2-2^{ème} élément de vibration actif (232) est disposé de manière à être incliné par rapport à chacune des première et deuxième parties périphériques du premier élément de vibration actif (211) ; et
chaque élément parmi le 2-3^{ème} élément de vibration actif (233) et le 2-4^{ème} élément de vibration actif (234) est disposé de manière à être incliné par rapport à chacune des troisième et quatrième parties périphériques du premier élément de vibration actif (211) ; et/ou
chacun des 2-1^{er} à 2-4^{ème} éléments de vibration actifs (231, 232, 233, 234) comporte :
une première partie de coin chevauchant le premier élément de vibration actif (211) ; et
une seconde partie de coin reliée à la partie de liaison (250), la partie de liaison (250) comportant :
le premier élément de liaison (251) relié entre la seconde partie de coin du 2-1^{er} élément de vibration actif (231) et l'élément de vibration passif (100) ;
le deuxième élément de liaison (252) relié entre la seconde partie de coin du 2-2^{ème} élément de vibration actif (232) et l'élément de vibration passif (100) ;
un troisième élément de liaison (253) relié entre la seconde partie de coin du 2-3^{ème} élément de vibration actif (233) et l'élément de vibration passif (100) ; et
un quatrième élément de liaison (254) relié entre la seconde partie de coin du 2-4^{ème} élément de vibration actif (234) et l'élément de vibration passif (100).

8. Appareil selon l'une quelconque des revendications 1 à 3, dans lequel une pluralité d'appareils de vibration (200) sont reliés à une surface arrière de l'élément de vibration passif (100).

9. Appareil selon la revendication 8, dans lequel chaque appareil de la pluralité d'appareils de vibration (200) comporte en outre un 2-3^{ème} élément de vibration actif (233) et un 2-4^{ème} élément de vibration actif (234) relié à une périphérie du premier élément de vibration actif (211) parallèlement à une partie centrale du premier élément de vibration actif (211) entre ceux-ci ; et
la partie de liaison (250) est reliée à la surface arrière de l'élément de vibration passif (100) et à chacun des 2-3^{ème} à 2-4^{ème} éléments vibrants actifs (233, 234).

10. Appareil selon la revendication 9, dans lequel la pluralité d'appareils de vibration (200) comporte un premier groupe incluant un ou plusieurs appareils de vibration (200) et un second groupe incluant un ou plusieurs appareils de vibration (200) ; et le nombre d'appareils de vibration du premier groupe est égal ou différent du nombre d'appareils de vibration du second groupe.

11. Appareil selon l'une quelconque des revendications 4 à 7, 9 et 10,
dans lequel un signal de commande appliqué au 2-1^{er} élément de vibration actif (231) est identique ou différent d'un signal de commande appliqué au 2-2^{ème} élément de vibration actif (232) ; et/ou
un signal de commande appliqué à chaque élément parmi le 2-1^{ème} élément de vibration actif (231) et le 2-2^{ème} élément de vibration actif (232) a une phase qui est identique ou opposée à une phase d'un signal de commande appliqué au premier élément de vibration actif (211) ; et/ou
un signal de commande appliqué à chacun des 2-1^{er} à 2-4^{ème} éléments de vibration actifs (231, 232, 233, 234) a une phase qui est identique ou opposée à une phase d'un signal de commande appliqué au premier élément de vibration actif (211) ; et/ou
au moins un ou plusieurs des signaux de commande appliqués respectivement aux 2-1^{er} à 2-4^{ème} éléments de vibration actifs (231, 232, 233, 234) a au moins ou plusieurs phases différentes et/ou amplitudes différentes ; et/ou
au moins un ou plusieurs éléments parmi une phase et une amplitude d'un signal de commande appliqué à chacun des 2-1^{er} à 2-4^{ème} éléments de vibration actifs (231, 232, 233, 234) diffèrent d'au moins un ou plusieurs éléments parmi une phase et une amplitude d'un signal de commande appliqué au premier élément de vibration actif (211) ; et/ou
un signal de commande appliqué au ou aux appareils de vibration (200) du premier groupe est identique ou différent d'un signal de commande appliqué au ou aux appareils de vibration (200) du second groupe.

12. Appareil selon l'une quelconque des revendications précédentes, dans lequel les éléments de vibration actifs (211, 231, 232) comportent un dispositif de vibration (201) incluant une couche piézoélectrique et la couche piézoélectrique (201a) comporte :
une pluralité de parties piézoélectriques incluant un matériau piézoélectrique ; et
une partie souple entre la pluralité de parties piézoélectriques.

13. Appareil selon l'une quelconque des revendications précédentes, dans lequel l'appareil de vibration (200) comporte en outre un élément de masse (260) sur le premier élément de vibration actif (211) et/ou l'élément de liaison (250) comporte un matériau élastique et/ou l'élément de vibration passif (100) est un panneau d'affichage incluant une zone d'affichage ayant une pluralité de pixels pour implémenter une image, ou comporte un ou plusieurs matériaux parmi du bois, un caoutchouc, une matière plastique, du verre souple, une fibre, du tissu, du papier, un métal, du carbone, un miroir et du cuir.
